# EUROPEAN PATENT APPLICATION

(11) **EP 4 837 777 A1**
(43) Date of publication of application: **11.11.2026**
(21) Application number: 26176867.5
(22) Date of filing: 06.05.2026
(51) Int. Cl.: B60L 53/302, B60L 53/18, B60L 53/30, B60L 53/31

(54) **CHARGING DEVICE**

(30) Priority: 07.05.2025 CN 202520889113 U
(71) Applicant: HUAWEI TECHNOLOGIES CO., LTD., Shenzhen 518129 (CN)
(72) Inventor: DAI, Shengyong, Shenzhen, 518129 (CN); LIAN, Zhisheng, Shenzhen, 518129 (CN); HE, Yuanning, Shenzhen, 518129 (CN); ZHANG, Ao, Shenzhen, 518129 (CN); LIN, Ying, Shenzhen, 518129 (CN)
(74) Representative: Gill Jennings & Every LLP

(57) **Abstract**

Embodiments of this application provide a charging device, and relate to the field of charging technologies. The charging device includes a device cabinet, a first cabinet door, a first switching component, a first charging connector, a first cable, and a first control board. The device cabinet includes a first side panel, a second side panel, a top panel, and a bottom panel. The first cabinet door is connected to the first side panel or the second side panel, and the first cabinet door has a display. The first switching component is located in the device cabinet and is fastened to the first side panel, and an input end of the first switching component is configured to electrically connect to a power supply. The first charging connector is located outside the device cabinet, and the first charging connector is configured to connect to a to-be-charged device. A part of the first cable is located in the device cabinet and is connected to an output end of the first switching component, and the other part of the first cable is located outside the device cabinet and is connected to the charging connector. The first control board is located in the device cabinet and is fastened to the first side panel, and the first control board is electrically connected to the first switching component and is configured to control turn-on and turn-off of the first switching component.

## Description

### TECHNICAL FIELD

This application relates to the field of charging technologies, and in particular, to a charging device.

### BACKGROUND

The trend of energy saving and emission reduction drives rapid development of electric vehicles. With popularization of electric vehicles, charging stations for electric vehicles become the focus of development for the vehicle and energy industries. To-be-charged apparatuses, such as electric heavy trucks, have increasingly high requirements on the charging power and rate of charging devices in charging stations. Therefore, it is necessary to increase the power level of charging devices, which will result in more apparatuses or components mounted in device cabinets of charging devices, demanding high-density layouts inside charging devices.

In a related technology, a distance between a switching component of a charging device and a control board configured to control the switching component is long, making their connection inconvenient. In addition, a connection structure between the switching component and the control board occupies a large space, which is not conducive to the high-density layout inside the charging device.

### SUMMARY

This application provides a charging device, to implement a high-density layout inside the charging device by reasonably arranging components or apparatuses inside the charging device.

To achieve the foregoing objective, this application uses the following technical solutions.

This application provides a charging device. The charging device includes a device cabinet, a first cabinet door, a first switching component, a first charging connector, a first cable, and a first control board. The device cabinet includes a first side panel and a second side panel that are arranged along a width direction of the device cabinet, and a top panel and a bottom panel that are arranged along a height direction of the device cabinet. The first cabinet door is connected to the first side panel or the second side panel, and the first cabinet door has a display. The first switching component is located in the device cabinet and is fastened to the first side panel, and an input end of the first switching component is configured to electrically connect to a power supply. The first charging connector is located outside the device cabinet, and the first charging connector is configured to connect to a to-be-charged device. A part of the first cable is located in the device cabinet and is connected to an output end of the first switching component, and the other part of the first cable is located outside the device cabinet and is connected to the charging connector. The first control board is located in the device cabinet and is fastened to the first side panel, and the first control board is electrically connected to the first switching component and is configured to control turn-on and turn-off of the first switching component.

The input end of the first switching component is connected to the power supply (for example, a power grid). After power conversion is performed on a current provided by the power supply, the current is input into the first switching component through the input end of the first switching component. When the first switching component is turned on, the first switching component allows the current to be output from the output end of the first switching component. The current output from the output end of the first switching component is transferred to the first charging connector via the first cable, and then is used to charge the to-be-charged device (for example, an electric vehicle) through the first charging connector. The first control board is disposed close to the first switching component, that is, the first control board is disposed on the first side panel. This facilitates a connection between the first control board and the first switching component, and shortens a length of a connection structure (for example, an electrical wire or a copper busbar) between the first control board and the first switching component. In this way, the device cabinet has larger space for mounting more apparatuses and devices, and a high-density layout in the device cabinet is implemented. This facilitates an increase in a power level of the charging device, and meets a high-power fast-charging requirement of the to-be-charged device (for example, an electric heavy truck).

In an embodiment of this application, the charging device further includes a first mounting bracket, the first mounting bracket is fastened to the first side panel, and the first switching component is fastened to a side that is of the first mounting bracket and that is away from the first side panel. The first control board is fastened to a side that is of the first mounting bracket and that faces the first cabinet door. Alternatively, the first control board is at least partially located in the first mounting bracket and disposed between the first switching component and the first side panel, the first mounting bracket has a first opening facing the first cabinet door, and the first opening is used for insertion of the first control board into the first mounting bracket or removal of the first control board from the first mounting bracket.

The first cabinet door is an inspection door, and the first switching component is fastened on the side that is of the first mounting bracket and that is away from the first side panel. After the first cabinet door is opened, a person reaches a hand into the device cabinet, so that the first switching component can be mounted or dismounted. This helps the person maintain the first switching component, and also helps the person connect the first cable to or disconnect the first cable from the first switching component. In addition, the first control board is also fastened to the first mounting bracket, and the first control board is fastened to the side that is of the first mounting bracket and that faces the first cabinet door. Alternatively, the first control board is inserted into the first mounting bracket, and the first opening that can be used to mount or dismount the first control board faces the first cabinet door. In this way, after the first cabinet door is opened, this helps the person maintain the first control board.

The first switching component and the first control board are respectively mounted at different positions of the first mounting bracket, and the first mounting bracket can enable the first switching component and the first control board to be arranged in a staggered manner (in other words, placed in a stacked manner) in the width direction of the device cabinet. This improves utilization of internal space of the device cabinet, and facilitates maintenance of the first switching component and the first control board.

In addition, the first switching component and the first control board are fastened to the first mounting bracket. When the first switching component and the first control board in the device cabinet need to be dismounted, the first switching component and the first control board may be dismounted separately, or the first switching component and the first control board may be integrally dismounted by dismounting the first mounting bracket (another component on the first mounting bracket is also dismounted).

In an embodiment of this application, the charging device further includes a first power supply apparatus, the first power supply apparatus is configured to electrically connect to the power supply and the first control board, and the first power supply apparatus is configured to perform power conversion on electric energy input by the power supply and output the converted electric energy to the first control board to supply power to the first control board. The first power supply apparatus is fastened to the side that is of the first mounting bracket and that faces the first cabinet door. Alternatively, the first power supply apparatus is at least partially located in the first mounting bracket and disposed between the first switching component and the first side panel, the first mounting bracket further has a second opening facing the first cabinet door, and the second opening is used for insertion of the first power supply apparatus into the first mounting bracket or removal of the first power supply apparatus from the first mounting bracket.

The first switching component, the first control board, and the first power supply apparatus are arranged in a staggered manner (in other words, placed in a stacked manner) through the first mounting bracket. For example, the first control board and the first power supply apparatus are mounted behind or on a side of the first switching component. This improves utilization of the internal space of the device cabinet, and facilitates maintenance of the first switching component, the first control board, and the first power supply apparatus.

For example, the first power supply apparatus is mounted on the side that is of the first mounting bracket and that faces the first cabinet door. After the first cabinet door is opened, the first power supply apparatus faces the person, so that the person can maintain the first power supply apparatus.

For another example, the first power supply apparatus is inserted into the first mounting bracket, and the second opening that can be used to mount or dismount the first power supply apparatus faces the first cabinet door. After the first cabinet door is opened, this helps the person maintain the first power supply apparatus. The first power supply apparatus is configured to be dismountable relative to the first mounting bracket. After the first cabinet door is opened, the internal space of the device cabinet communicates with external space. The person pulls the power supply apparatus outward, and gradually pulls the first power supply apparatus out of the device cabinet, so that the first power supply apparatus can be dismounted. When the first power supply apparatus needs to be mounted, the first power supply apparatus is pushed toward the inside of the first mounting bracket. After the first power supply apparatus is inserted into the second opening, the first power supply apparatus is continuously pushed toward the inside of the first mounting bracket in a direction away from the first cabinet door, so that mounting of the first power supply apparatus can be completed.

In an embodiment of this application, the charging device further includes a first power supply apparatus, the first power supply apparatus is located in the device cabinet and is fastened to the top panel, the first power supply apparatus is configured to electrically connect to the power supply and the first control board, and the first power supply apparatus is configured to perform power conversion on electric energy input by the power supply and output the converted electric energy to the first control board to supply power to the first control board.

The first power supply apparatus may further supply power to other devices or apparatuses, and the first power supply apparatus is disposed on the top of the device cabinet. This facilitates external wiring of the first power supply apparatus, reduces a quantity of power supply apparatuses in the device cabinet, and saves internal space of the device cabinet.

In an embodiment of this application, the first power supply apparatus can slide relative to the device cabinet in a direction toward or away from the first cabinet door.

The first power supply apparatus is configured to be slidable relative to the device cabinet, to facilitate mounting and dismounting of the first power supply apparatus. In a process of pulling the first power supply apparatus, the first power supply apparatus slides in the direction toward or away from the first cabinet door. After the first cabinet door is opened, the internal space of the device cabinet communicates with the external space. The person pulls the power supply apparatus outward, and gradually pulls the first power supply apparatus out of the device cabinet, so that the first power supply apparatus can be dismounted. When the first power supply apparatus needs to be mounted, the first power supply apparatus is pushed toward the inside of the device cabinet. After the first power supply apparatus is located in the device cabinet, the power supply apparatus is continuously pushed toward the inside of the device cabinet in the direction away from the first cabinet door, so that mounting of the first power supply apparatus can be completed.

In an embodiment of this application, the charging device further includes a first cooling assembly, and the first cooling assembly is connected to the first side panel and located below the first switching component. The first cooling assembly includes a first driving piece and a first heat exchanger, the first cable has a cooling channel for a cooling medium to flow, the first heat exchanger has a first heat exchange channel and a second heat exchange channel, the first heat exchange channel communicates with the cooling channel, the second heat exchange channel is configured to connect to a cooling source outside the device cabinet, and the first driving piece is configured to drive the cooling medium to circulate between the first heat exchange channel and the cooling channel.

The first driving piece drives the cooling medium to flow between the first heat exchange channel and the cooling channel. The cooling medium absorbs heat of the first cable after entering the cooling channel from the first heat exchange channel. The cooling medium that absorbs the heat flows out of the cooling channel and enters the first heat exchange channel of the first heat exchanger. The cooling medium in the first heat exchange channel exchanges heat with a cooling source medium from the cooling source in the second heat exchange channel. A temperature of the cooling medium decreases after heat exchange, and the cooling medium returns to the cooling channel to cool the first cable. This process is repeated, to implement circulating cooling on the first cable.

In addition, the first cooling assembly is disposed below the first switching component, so that when the first cooling assembly is faulty and causes liquid leakage (for example, leakage of the cooling medium), a possibility that the cooling medium is in contact with the first switching component can be reduced, and a risk that the first switching component is faulty can be reduced. In addition, the first cooling assembly needs to be externally connected to the cooling source, and the first cooling assembly is disposed below the first switching component, so that a length of a pipe for externally connecting to the cooling source can also be reduced. In some cases, the first cooling assembly is heavy, and the first cooling assembly is mounted at a low position (lower than the first switching component) in the device cabinet, so that a safety risk caused in a process of mounting the first cooling assembly is reduced.

In addition, the cooling source is located outside the device cabinet, and the cooling source and the first cooling assembly are communicated to cool the cooling medium. There is no need to dispose a cooling source in the device cabinet, and there is no need to provide an air vent on the device cabinet (if the cooling source is disposed in the device cabinet, an air vent needs to be provided on the device cabinet to cool the cooling source). This improves a protection level of the device cabinet, and reduces a possibility that external impurities enter the device cabinet.

In an embodiment of this application, the charging device further includes a first receiving seat and a first liquid discharge channel, the first receiving seat is located below the first heat exchanger, the first receiving seat is configured to receive liquid from the first heat exchanger, a liquid inlet of the first liquid discharge channel is configured to communicate with the first receiving seat, and a liquid outlet of the first liquid discharge channel is configured to communicate with external space of the device cabinet.

Because a medium (for example, the cooling source medium from the cooling source) with a low temperature flows in the first heat exchanger, and an ambient temperature inside the device cabinet in which the first cooling assembly is located is high, condensate water may appear on the first heat exchanger. If no structure for discharging condensate water is disposed, a large amount of condensate water is accumulated in the device cabinet. The first receiving seat disposed in this application is located below the first heat exchanger, and is configured to receive the condensate water of the first heat exchanger. Through disposition of the first liquid discharge channel, the condensate water in the first receiving seat can be discharged out of the device cabinet, so that an amount of condensate water accumulated in the device cabinet is reduced.

In an embodiment of this application, a part that is of the first cable and that is located in the device cabinet has an interface that communicates with the cooling channel, the interface is located above the first switching component, and the interface communicates with the first heat exchange channel via a pipe. The charging device further includes a blocking piece, the blocking piece is fastened to the first side panel and extends toward a side that is away from the first side panel, the blocking piece is located between the interface and the first switching component, and the blocking piece is configured to block liquid from the interface from flowing to the first switching component.

Because the interface needs to communicate with the first cooling assembly via a pipeline, if a connection between the interface and the corresponding pipeline is loose, the cooling medium flows out and drips on the first switching component, causing damage to the first switching component. Therefore, the blocking piece is disposed to block the liquid from the interface, so that a possibility that the cooling medium flowing out from the interface drips on the first switching component is reduced, and a risk of damage to the charging device is reduced.

In an embodiment of this application, the first cabinet door has a first water baffle, the first water baffle extends toward the inside of the device cabinet, and the first water baffle is located above the display.

After the first cabinet door is opened, the first water baffle can block and intercept liquid dripping from the top of the first cabinet door to some extent. This reduces a possibility of short-circuit damage to a plurality of apparatuses (for example, the display) on the first cabinet door caused by the liquid dripping from the top of the first cabinet door.

In an embodiment of this application, the charging device further includes a second cabinet door, the second cabinet door and the first cabinet door are respectively located on different sides of the device cabinet in a thickness direction of the device cabinet, and the second cabinet door is connected to the second side panel or the first side panel.

The second cabinet door may be used for auxiliary inspection. In some cases (for example, when an inspection requirement cannot be met by opening only the first cabinet door), the person may also open the second cabinet door to maintain an apparatus in the device cabinet, so that flexibility of maintaining the charging device by the person is improved.

In an embodiment of this application, the charging device further includes a mixing fan, the mixing fan is located in the device cabinet and is fastened to the second cabinet door, and the mixing fan is configured to blow air into the device cabinet.

The mixing fan can eliminate a local hot spot inside the device cabinet, so that a temperature inside the device cabinet is uniform. The mixing fan is disposed on the second cabinet door, so that space on the second cabinet door is fully utilized, and a layout in the device cabinet is more reasonable.

In an embodiment of this application, the second cabinet door has a second water baffle, the second water baffle extends toward the inside of the device cabinet, and the second water baffle is located above the mixing fan.

After the second cabinet door is opened, the second water baffle can block and intercept liquid dripping from the top of the second cabinet door to some extent. This reduces a possibility of short circuits in a plurality of apparatuses (for example, the mixing fan) on the second cabinet door caused by the liquid dripping from the top of the second cabinet door.

In an embodiment of this application, the charging device further includes a second switching component, a second charging connector, a second cable, and a second control board. The second switching component is located in the device cabinet and is fastened to the second side panel, and an input end of the second switching component is configured to electrically connect to the power supply. The second charging connector is located outside the device cabinet, and the second charging connector is configured to connect to the to-be-charged device. A part of the second cable is located in the device cabinet and is connected to an output end of the second switching component, and the other part of the second cable is located outside the device cabinet and is connected to the second charging connector. The second control board is located in the device cabinet and is fastened to the second side panel, and the second control board is electrically connected to the second switching component and is configured to control turn-on and turn-off of the second switching component.

A plurality of components and apparatuses in the device cabinet are deployed in a two-side layout manner, so that the plurality of components and apparatuses each have sufficient space for inspection and maintenance. In addition, a plurality of cabinet boards of the device cabinet are all used as mounting surfaces of the components and apparatuses, so that utilization of the internal space of the device cabinet is improved. In addition, the first charging control board is close to the first switching component and is configured to control the first switching component, and the second charging control board is close to the second switching component and is configured to control the second switching component. This not only shortens the length of the connection structure between the first control board and the first switching component, but also shortens a length of a connection structure between the second control board and the second switching component, so that the layout in the device cabinet is more reasonable, and the device cabinet has larger space for mounting more apparatuses and devices, which is conducive to the high-density layout in the device cabinet.

In an embodiment of this application, the charging device further includes a third control board, the third control board is electrically connected to the display, and the third control board is fastened to the first cabinet door or is fastened to the top panel.

The display is fastened to the first side panel. After the device cabinet is mounted, the display may face the person, so that the person can observe content on the display. The third control board can control display content of the display, and the third control board is disposed close to the display, so that the third control board is connected to the display. In addition, the third control board may alternatively be disposed on the top of the device cabinet, so that the internal space of the device cabinet is fully utilized, and the layout in the device cabinet is more reasonable.

In an embodiment of this application, the charging device further includes a first electric meter, and the first electric meter is configured to display charging data of the first charging connector. The first electric meter is fastened to a side that is of the first switching component and that faces the first cabinet door. Alternatively, the charging device further includes a second mounting bracket, the second mounting bracket is located on a side that is of the first switching component and that is away from the first cabinet door, the second mounting bracket is fastened to the first side panel or the second side panel, the first electric meter is fastened to a side that is of the second mounting bracket and that faces the first cabinet door, and the first electric meter and the first switching component are disposed in a staggered manner in the width direction of the device cabinet.

The first electric meter can display the charging data of the first charging connector, to measure a charging amount of the charging device. The first electric meter is fastened to the side that is of the first switching component and that faces the first cabinet door. After the first cabinet door is opened, the person can intuitively observe a value of the first electric meter, and this also helps the person maintain the first electric meter. The first electric meter is fastened to the second mounting bracket, and the first electric meter and the first switching component are disposed in the staggered manner in the width direction of the device cabinet, so that a thickness of the device cabinet can be reduced. In addition, after the first cabinet door is opened, the first switching component does not shield the first electric meter, so that the first electric meter can be observed and inspected without dismounting the first switching component.

In an embodiment of this application, the charging device further includes a third cable and a base. The third cable passes through the bottom panel, a part of the third cable is located in the device cabinet and is connected to the input end of the first switching component, and the other part of the third cable is located outside the device cabinet and is configured to electrically connect to the power supply. The base is fastened to a bottom of the bottom panel, both a top and a bottom of the base have cable ports that communicate with internal space of the base, the third cable passes through the two cable ports of the base, and a peripheral wall of the base has an air vent that communicates with the internal space of the base.

When the device cabinet is mounted, a groove used for routing (for example, the third cable) is usually provided at a mounting position of the device cabinet. Because the third cable needs to pass through the bottom panel of the device cabinet, an opening for the third cable to pass through is provided on the bottom panel, so that the device cabinet communicates with the groove. However, sometimes liquid is accumulated in the groove. If the liquid evaporates into the device cabinet, there may be a risk of damaging the apparatuses and components (for example, the first switching component) in the device cabinet. The base is disposed, and the air vent is provided on the base, so that more liquid in the groove can evaporate outward through the air vent, and the apparatuses and the components in the device cabinet are protected.

In an embodiment of this application, the charging device further includes a protective cover, and the protective cover is fastened in the device cabinet. The protective cover is located on a side that is of the first switching component and that faces the first cabinet door, and the protective cover shields the first switching component; or the protective cover is located on a side that is of the first switching component and that is away from the first side panel, and the protective cover is disposed over the first switching component.

After the first cabinet door is opened, the protective cover can shield a plurality of first switching components, so that the first switching component is not exposed. In this way, the person can be protected, the first switching component can be protected, and the device cabinet can be tidier. When the first switching component needs to be inspected, the protective cover may be dismounted.

In an embodiment of this application, the charging device further includes a heat dissipator, the heat dissipator is fastened in the device cabinet, the heat dissipator has a heat dissipation channel, the heat dissipation channel is configured to connect to a cooling source outside the device cabinet, and the heat dissipator is configured to exchange heat with air inside the device cabinet.

During the operation of the charging device, a temperature inside the device cabinet increases. When the temperature inside the device cabinet is excessively high, a cooling source medium with a cooling function is provided for the heat dissipation channel of the heat dissipator through the cooling source, so that heat exchange can be performed between air in the heat dissipation channel and air in the device cabinet, thereby reducing the temperature inside the device cabinet, and facilitating stable running of the charging device.

In an embodiment of this application, the charging device further includes a second receiving seat and a second liquid discharge channel, the second receiving seat is located below the heat dissipator, the second receiving seat is configured to receive liquid from the heat dissipator, a liquid inlet of the second liquid discharge channel is configured to communicate with the second receiving seat, and a liquid outlet of the second liquid discharge channel is configured to communicate with external space of the device cabinet.

Because a medium (the cooling source medium from the cooling source) with a low temperature flows in the heat dissipator, and an ambient temperature inside the device cabinet is high, condensate water may appear on the heat dissipator. Through disposition of the second receiving seat, the condensate water dripping from the heat dissipator can be received, and the condensate water is discharged out of the device cabinet via the second liquid discharge channel, so that a possibility of condensate water accumulating in the device cabinet is reduced.

### BRIEF DESCRIPTION OF DRAWINGS

FIG. 1 is a diagram of a structure of a charging device according to an embodiment of this application;
FIG. 2 is a diagram of a structure of another charging device according to an embodiment of this application;
FIG. 3 is a diagram of a partial structure of a charging device according to an embodiment of this application;
FIG. 4 is a diagram of an internal structure of a charging device according to an embodiment of this application;
FIG. 5 is a diagram of a structure of a first direct current power distribution apparatus according to an embodiment of this application;
FIG. 6 is a diagram of a structure of a first mounting bracket according to an embodiment of this application;
FIG. 7 is a diagram of a structure of another first mounting bracket according to an embodiment of this application;
FIG. 8 is a diagram of a structure of a second mounting bracket according to an embodiment of this application;
FIG. 9 is a diagram of a structure of a second direct current power distribution apparatus according to an embodiment of this application;
FIG. 10 is a diagram of a structure of a first power supply apparatus according to an embodiment of this application;
FIG. 11 is a diagram of a structure of a first cooling assembly according to an embodiment of this application;
FIG. 12 is a diagram of a structure of a first receiving seat and a first liquid discharge channel according to an embodiment of this application;
FIG. 13 is a diagram of a structure of a second cooling assembly according to an embodiment of this application;
FIG. 14 is a diagram of a structure of an interface according to an embodiment of this application;
FIG. 15 is a diagram of a structure of a heat dissipator according to an embodiment of this application;
FIG. 16 is a diagram of a structure of a second cabinet door according to an embodiment of this application;
FIG. 17 is a diagram of a structure of a protective cover according to an embodiment of this application;
FIG. 18 is a diagram of a structure of another protective cover according to an embodiment of this application;
FIG. 19 is a diagram of positions of gun holders according to an embodiment of this application; and
FIG. 20 is a diagram of other positions of gun holders according to an embodiment of this application.

### Reference numerals:

01-charging device; 1-device cabinet; 11-first side panel; 12-second side panel; 13-top panel; 14-bottom panel; 15-cable outlet; 2-power conversion apparatus; 3-alternating current power distribution apparatus; 4-direct current power distribution apparatus; 41-first direct current power distribution apparatus; 411-first switching component; 412-first input metal busbar; 413-first output metal busbar; 414-first protective component; 415-first shunt; 42-second direct current power distribution apparatus; 421-second switching component; 422-second input metal busbar; 423-second output metal busbar; 424-second protective component; 425-second shunt; 5-charging connector; 51-first charging connector; 52-second charging connector; 6-cable; 61-first cable; 611-positive cable; 612-negative cable; 613-cooling channel; 62-second cable; 63-interface; 631-cooling pipe; 7-main cabinet; 8-power allocation apparatus; 9-first cabinet door; 91-display; 92-card reading apparatus; 921-radio frequency identification card reader; 922-sales terminal; 93-indicator light; 94-first water baffle; 101-first control board; 102-second control board; 103-third control board; 201-first mounting bracket; 2011-first opening; 2012-second opening; 202-second mounting bracket; 203-third mounting bracket; 2031-third opening; 2032-fourth opening; 301-first power supply apparatus; 302-second power supply apparatus; 401-first electric meter; 402-second electric meter; 50-first cooling assembly; 501-first driving piece; 502-first heat exchanger; 5021-first heat exchange channel; 5022-second heat exchange channel; 503-assembly housing; 5031-liquid discharge hole; 601-first receiving seat; 602-first liquid discharge channel; 603-fastening base; 604-second receiving seat; 605-second liquid discharge channel; 70-second cooling assembly; 80-blocking piece; 801-accommodating cavity; 802-cavity opening; 803-overflow opening; 804-first baffle; 805-second baffle; 806-third baffle; 90-heat dissipator; 901-heat dissipation channel; 902-heat dissipation fan; 100-second cabinet door; 1001-mixing fan; 1002-second water baffle; 200-protective cover; 300-third cable; 400-base; 401-cable port; 402-air vent; 500-emergency stop button; 600-gun holder; 02-power supply; 03-cooling source.

### DESCRIPTION OF EMBODIMENTS

The following describes technical solutions in embodiments of this application with reference to accompanying drawings in embodiments of this application. It is clear that the described embodiments are merely a part rather than all of embodiments of this application.

In this application, unless otherwise expressly specified and limited, orientations or position relationships indicated by terms such as "up", "down", "front", "back", "left", and "right" may include but are not limited to be defined with respect to orientations of parts schematically placed in the accompanying drawings. These directional terms may be relative concepts, may be used for relative description and clarification, and may vary correspondingly based on changes of the placement orientations of the parts in the accompanying drawings. Such terms cannot be understood as a limitation on this application.

In this application, terms "first", "second", and the like are merely used for the purpose of description, and are intended to distinguish between one element and another element, but cannot be understood as an indication or implication of relative importance or an implicit indication of a quantity of indicated technical features. Therefore, a feature limited by "first", "second", or the like may explicitly or implicitly include one or more such features.

In this application, unless otherwise expressly specified and limited, "a plurality of" means two or more.

In addition, in this application, the term "example", "for example", or the like indicates giving an example, an illustration, or a description. Any embodiment or design scheme described with "example" or "for example" in this application should not be explained as being more preferred or having more advantages than another embodiment or design scheme. Exactly, use of the term "example", "for example", or the like is intended to present a related concept in a specific manner.

In the accompanying drawings of embodiments of this application, entity structures such as parts and assemblies are represented by guide lines. A structure including a plurality of parts is represented by parentheses or guide lines with solid arrows. Hollow structures such as openings, holes, space, and cavities are represented by guide lines with hollow arrows.

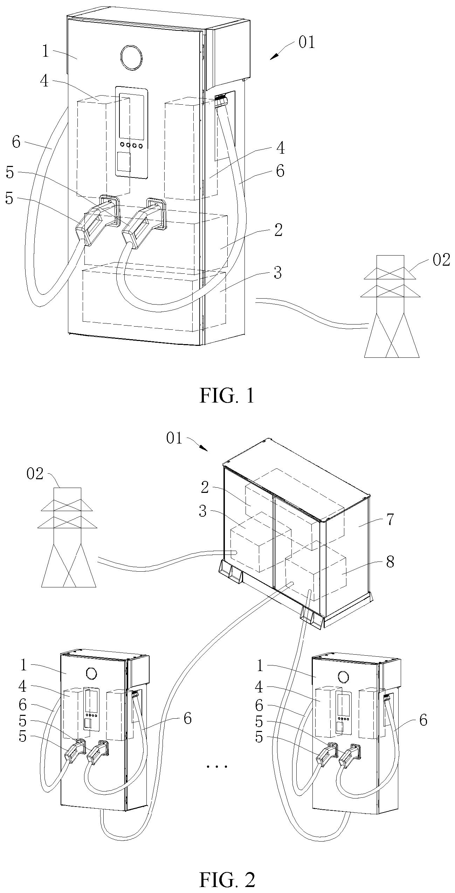

Embodiments of this application provide a charging device 01. FIG. 1 shows an example of a structure of the charging device 01. With reference to FIG. 1, the charging device 01 is an integrated charging pile. The charging device 01 includes a device cabinet 1, a power conversion apparatus 2, an alternating current power distribution apparatus 3, and a direct current power distribution apparatus 4. The power conversion apparatus 2, the alternating current power distribution apparatus 3, and the direct current power distribution apparatus 4 are all mounted in the device cabinet 1.

An input end of the alternating current power distribution apparatus 3 is configured to connect to a power supply 02. The power supply 02 may be a power grid. An output end of the alternating current power distribution apparatus 3 is connected to an input end of the power conversion apparatus 2, and the alternating current power distribution apparatus 3 is configured to control connection and disconnection of a circuit between the power supply 02 and the power conversion apparatus 2. The power conversion apparatus 2 is configured to convert an alternating current input by the power supply 02 through the alternating current power distribution apparatus 3 into a direct current and then output the direct current. An output end of the power conversion apparatus 2 is connected to an input end of the direct current power distribution apparatus 4.

In addition, with reference to FIG. 1, the charging device 01 further includes at least one charging connector 5 (for example, a charging gun) and at least one cable 6 (for example, a charging gun cable). In the embodiment shown in FIG. 1, two charging connectors 5 are disposed, two cables 6 are also disposed, and two direct current power distribution apparatuses 4 are also disposed. The charging connector 5 is located outside the device cabinet 1, the charging connector 5 is configured to connect to a to-be-charged device (for example, an electric vehicle), and the charging connector 5 is connected to a corresponding direct current power distribution apparatus 4 via a corresponding cable 6. The direct current power distribution apparatus 4 is configured to control connection and disconnection of a circuit between the power conversion apparatus 2 and the cable 6, and the charging connector 5 can output a current that has undergone power conversion by the power conversion apparatus 2.

In some other embodiments, one charging connector 5, one cable 6, and one direct current power distribution apparatus 4 are disposed. In some other embodiments, there may alternatively be no distinct alternating current power distribution apparatus 3 in the device cabinet 1 of the charging device 01.

FIG. 2 shows an example of a structure of another charging device 01. With reference to FIG. 2, the charging device 01 is a split-type charging pile. The charging device 01 includes a main part and a plurality of terminal parts. The main part of the charging device 01 includes a main cabinet 7, a power conversion apparatus 2, an alternating current power distribution apparatus 3, and a power allocation apparatus 8. The power conversion apparatus 2, the alternating current power distribution apparatus 3, and the power allocation apparatus 8 are all mounted in the main cabinet 7. An input end of the alternating current power distribution apparatus 3 is configured to connect to a power supply 02 (for example, a power grid). The power conversion apparatus 2 is configured to convert an alternating current input by the power supply 02 into a direct current and output the direct current. The power allocation apparatus 8 may allocate, to one or more terminal parts, the direct current output by the power conversion apparatus 2.

Each terminal part of the charging device 01 includes a device cabinet 1, a direct current power distribution apparatus 4, a charging connector 5, and a cable 6. For example, in the embodiment shown in FIG. 2, two charging connectors 5 are disposed in each terminal part, two cables 6 are also disposed in each terminal part, and two direct current power distribution apparatuses 4 are also disposed in each terminal part. Each charging connector 5 is connected to a corresponding direct current power distribution apparatus 4 via a corresponding cable 6. The direct current power distribution apparatus 4 is mounted in the device cabinet 1, the charging connector 5 is located outside the device cabinet 1, the direct current power distribution apparatus 4 is configured to control connection and disconnection of a circuit between the power conversion apparatus 2 and the cable 6, and the charging connector 5 can output a current that has undergone power conversion by the power conversion apparatus 2.

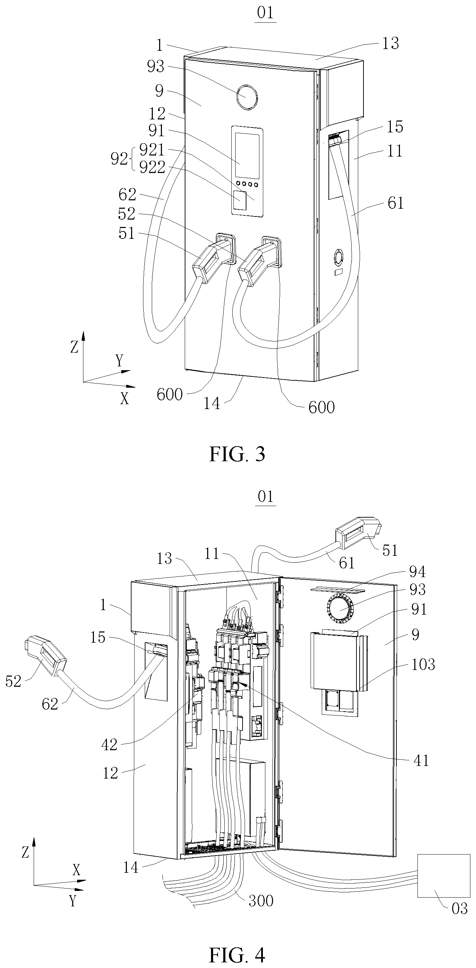

The charging device 01 in FIG. 2 is used as an example. FIG. 3 shows an example of a partial structure of the charging device 01 (a terminal part of the charging device 01) in FIG. 2. FIG. 4 shows an example of an internal structure of the charging device 01 in FIG. 3. With reference to FIG. 3 and FIG. 4, the charging device 01 includes a device cabinet 1 and a first cabinet door 9. The device cabinet 1 includes a first side panel 11 and a second side panel 12. The first side panel 11 and the second side panel 12 are arranged along a width direction (an X-axis direction) of the device cabinet 1, and the first side panel 11 and the second side panel 12 are disposed opposite to each other in the width direction of the device cabinet 1. In addition, the device cabinet 1 further includes a top panel 13 and a bottom panel 14 that are arranged along a height direction (a Z-axis direction) of the device cabinet 1. It may be understood that the first side panel 11, the second side panel 12, the top panel 13, and the bottom panel 14 enclose internal space of the device cabinet 1.

With reference to FIG. 3 and FIG. 4, the first cabinet door 9 is connected to the first side panel 11 or the second side panel 12. FIG. 3 and FIG. 4 show an example of a case in which the first cabinet door 9 is connected to the first side panel 11. In addition, the first cabinet door 9 can rotate relative to the device cabinet 1. For example, the first cabinet door 9 is hinged (connected via a hinge) to the first side panel 11. The first cabinet door 9 can open or seal the device cabinet 1, so that the first cabinet door 9 is used as an inspection door for opening or closing the device cabinet 1. With reference to FIG. 3, the first cabinet door 9 in a closed state closes the device cabinet 1. With reference to FIG. 4, the first cabinet door 9 in an open state rotates to an outer side of the device cabinet 1, to open the device cabinet 1.

The first cabinet door 9 has a display 91. A display region of the display 91 is exposed outside the device cabinet 1 through an opening on the first cabinet door 9, and the display region of the display 91 that is exposed outside the device cabinet 1 is for a person to observe content displayed by the display 91 (for example, the display 91 can display charging information, a charging situation, and the like). After the device cabinet 1 is mounted, the display 91 is oriented toward a direction that is convenient for the person to observe, so that the person can observe the content on the display 91. It may be understood that, the person stands in front of the device cabinet 1 facing the display 91, a left-right direction of the person is the width direction (the X-axis direction) of the device cabinet 1, a front-back direction of the person is a thickness direction (a Y-axis direction) of the device cabinet 1, and an up-down direction of the person is the height direction (the Z-axis direction) of the device cabinet 1.

In some embodiments, with reference to FIG. 3, the first cabinet door 9 further has a card reading apparatus 92. The card reading apparatus 92 is configured to identify an integrated circuit card (Integrated Circuit Card, IC card), so that the charging device 01 can identify an IC card (a bank card, a charging card, or the like) of a user through the card reading apparatus 92, and perform corresponding charging and billing. In the embodiment shown in FIG. 3, the card reading apparatus 92 includes a radio frequency identification card reader 921 (RFID card reader) and a sales terminal 922 (POS machine). An identification region of the radio frequency identification card reader 921 is exposed outside the device cabinet 1, and a card insertion region and a password input region of the sales terminal 922 are exposed outside the device cabinet 1. In some other embodiments, the radio frequency identification card reader 921 is disposed on the first cabinet door 9 and no sales terminal 922 is disposed, or the sales terminal 922 is disposed on the first cabinet door 9 and no radio frequency identification card reader 921 is disposed. In some other examples, the card reading apparatus 92 may alternatively be a card reading device other than the foregoing two card reading devices.

In the embodiments shown in FIG. 3 and FIG. 4, the card reading apparatus 92 and the display 91 are arranged along the height direction (the Z-axis direction) of the device cabinet 1. In this arrangement manner, a size of the device cabinet 1 in the width direction (the X-axis direction) can be reduced. In some other examples, the card reading apparatus 92 may alternatively be disposed at another appropriate position.

In some examples, the display 91 and the card reading apparatus 92 may be integrated into a module, to improve integration of the display 91 and the card reading apparatus 92, and facilitate overall mounting or overall dismounting of the module formed by integrating the display 91 and the card reading apparatus 92. For example, before the charging device 01 is assembled, the display 91 and the card reading apparatus 92 may be fastened to a plate-like structure in advance, and then the plate-like structure (carrying the display 91 and the card reading apparatus 92) is fastened to the first cabinet door 9, so that assembly efficiency of the charging device 01 is improved.

In some embodiments, with reference to FIG. 3 and FIG. 4, the first cabinet door 9 further has an indicator light 93, and the indicator light 93 is located above the display 91. The indicator light 93 is configured to display a charging status of the charging device 01. For example, the indicator light 93 represents information such as charging, standby, fault, reservation, and charged amount by using a change of a color or a shape.

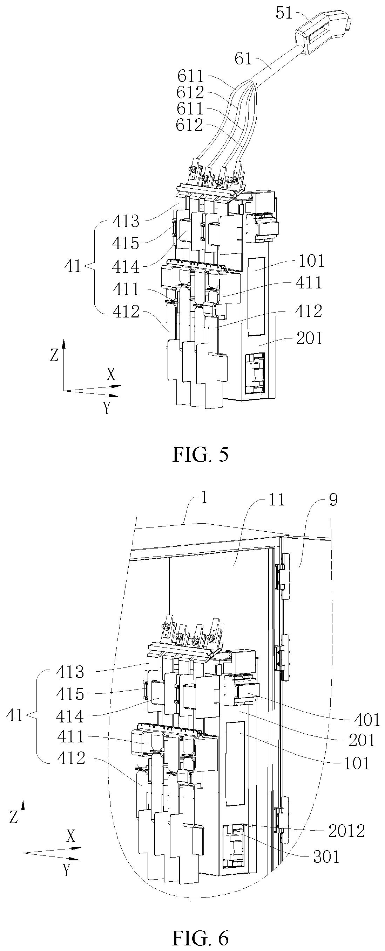

With reference to FIG. 4, a direct current power distribution apparatus 4 in the charging device 01 includes a first direct current power distribution apparatus 41. The first direct current power distribution apparatus 41 is mounted on the first side panel 11 in the device cabinet 1. After the first cabinet door 9 is opened, the first direct current power distribution apparatus 41 may be maintained from a side facing the first side panel 11. FIG. 5 shows an example of a structure of the first direct current power distribution apparatus 41. With reference to FIG. 4 and FIG. 5, the first direct current power distribution apparatus 41 includes a plurality of first switching components 411, the plurality of first switching components 411 are located in the device cabinet 1 and are fastened to the first side panel 11, and the plurality of first switching components 411 are arranged along the thickness direction (the Y-axis direction) of the device cabinet 1.

In some embodiments, with reference to FIG. 4 and FIG. 5, to reduce space occupied by the plurality of first switching components 411 in the thickness direction of the device cabinet 1, two adjacent first switching components 411 may be arranged in a staggered manner in the height direction (the Z-axis direction) of the device cabinet 1, in other words, the two adjacent first switching components 411 have a height difference. In some embodiments, there is no height difference between two adjacent first switching components 411.

In some embodiments, with reference to FIG. 5, the first direct current power distribution apparatus 41 further includes a plurality of first input metal busbars 412 (for example, copper busbars or aluminum busbars) and a plurality of first output metal busbars 413 (for example, copper busbars or aluminum busbars). Each first input metal busbar 412 is electrically connected to an input end of a corresponding first switching component 411, and each first output metal busbar 413 is electrically connected to an output end of a corresponding first switching component 411. In addition, in some embodiments, with reference to FIG. 5, the first direct current power distribution apparatus 41 may further include a plurality of first protective components 414 (for example, fuses), and the first protective component 414 is fastened between an output end of a first switching component 411 and a first output metal busbar 413. In some other embodiments, the first protective component 414 is fastened between an input end of the first switching component 411 and a first input metal busbar 412.

With reference to FIG. 4 and FIG. 5, a charging connector 5 includes a first charging connector 51 configured to connect to the first switching component 411, and a cable 6 includes a first cable 61 configured to connect the first charging connector 51 and at least one first switching component 411. In other words, the at least one first switching component 411 is connected to the first charging connector 51 via the first cable 61. The first cable 61 passes through the device cabinet 1, so that a part of the first cable 61 is located in the device cabinet 1, and the other part is located outside the device cabinet 1.

With reference to FIG. 4 and FIG. 5, the part that is of the first cable 61 and that is located in the device cabinet 1 is electrically connected to output ends of the plurality of first switching components 411. For example, in the embodiment shown in FIG. 5, the first cable 61 has a plurality of positive cables 611 and a plurality of negative cables 612 (the plurality of positive cables 611 and the plurality of negative cables 612 are wrapped with a sheath), and the plurality of positive cables 611 and the plurality of negative cables 612 of the first cable 61 each are electrically connected to an output end of one first switching component 411. When the first direct current power distribution apparatus 41 includes a plurality of first output metal busbars 413, the plurality of positive cables 611 and the plurality of negative cables 612 of the first cable 61 each are connected to one first output metal busbar 413. In some other embodiments, the first cable 61 has one positive cable 611 and one negative cable 612 (the positive cable 611 and the negative cable 612 are wrapped with a sheath), and the positive cable 611 and the negative cable 612 of the first cable 61 each are electrically connected to an output end of one first switching component 411.

The input end of the first switching component 411 is electrically connected to the power supply 02. For example, with reference to FIG. 5, when the first direct current power distribution apparatus 41 includes a plurality of first input metal busbars 412, the power supply 02 is electrically connected to the first input metal busbars 412. After power conversion is performed on a current provided by the power supply 02, the current is transferred to the first switching component 411 through the first input metal busbar 412. When the first switching component 411 is turned on, the first switching component 411 allows the current to be output from the output end of the first switching component 411. The current output from the output end of the first switching component 411 flows to the first cable 61 after passing through the first output metal busbar 413, is transferred to the corresponding first charging connector 51 via the first cable 61, and then is used to charge the to-be-charged device through the first charging connector 51.

In addition, with reference to FIG. 4 and FIG. 5, the charging device 01 further includes a first control board 101. The first control board 101 is located in the device cabinet 1 and is fastened to the first side panel 11. The first control board 101 is electrically connected to the first switching component 411 and is configured to control turn-on and turn-off of the first switching component 411. The first control board 101 includes a circuit board and a plurality of electronic components (including a control chip), and the plurality of electronic components of the first control board 101 are fastened to the circuit board of the first control board 101.

The first control board 101 is disposed on the first side panel 11, so that the first control board 101 is disposed close to the first switching component 411. This facilitates a connection between the first control board 101 and the first switching component 411, and shortens a length of a connection structure (for example, an electrical wire or a copper busbar) between the first control board 101 and the first switching component 411. In this way, the device cabinet 1 has larger space for mounting more apparatuses and devices, and a high-density layout in the device cabinet 1 is implemented. This facilitates an increase in a power level of the charging device 01, and meets a high-power fast-charging requirement of the to-be-charged device (for example, an electric heavy truck).

The first switching component 411 and the first control board 101 may be mounted on the first side panel 11 in any appropriate manner. For example, FIG. 6 shows an example of a structure of a first mounting bracket 201. With reference to FIG. 6, the charging device 01 further includes the first mounting bracket 201. A specific structure of the first mounting bracket 201 may be set based on a requirement. For example, the first mounting bracket 201 is formed by bending a metal plate, or the first mounting bracket 201 is formed by a plurality of metal rods that are fastened and overlapped with each other. The first mounting bracket 201 is fastened to the first side panel 11, and the first switching component 411 is fastened to a side that is of the first mounting bracket 201 and that is away from the first side panel 11. After the first cabinet door 9 is opened, the person reaches a hand into the device cabinet 1, so that the first switching component 411 can be mounted or dismounted. This helps the person maintain the first switching component 411, and also helps the person connect the first cable 61 to or disconnect the first cable 61 from the first switching component 411.

In an embodiment, with reference to FIG. 6, the first control board 101 is fastened to a side that is of the first mounting bracket 201 and that faces the first cabinet door 9. After the first cabinet door 9 is opened, the person can maintain the first control board 101 when facing the inside of the device cabinet 1.

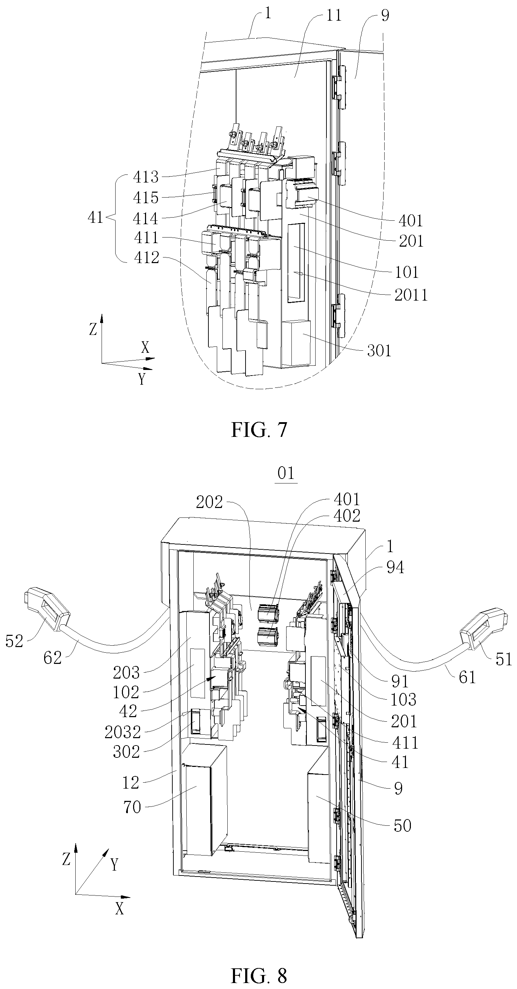

In another embodiment, FIG. 7 shows an example of a structure of another first mounting bracket 201. The first control board 101 is at least partially located in the first mounting bracket 201 and disposed between the first switching component 411 and the first side panel 11. For example, with reference to FIG. 7, the first control board 101 is entirely located in the first mounting bracket 201. In this embodiment, the first control board 101 may be fastened to the first mounting bracket 201 by using a fastener such as a bolt, and the first control board 101 may also be fastened to the first side panel 11 by using a fastener such as a bolt.

With reference to FIG. 7, the first mounting bracket 201 has a first opening 2011 facing the first cabinet door 9, and the first opening 2011 is used for insertion of the first control board 101 into the first mounting bracket 201 or removal of the first control board 101 from the first mounting bracket 201. The first opening 2011 for mounting or dismounting the first control board 101 faces the first cabinet door 9. After the first cabinet door 9 is opened, the internal space of the device cabinet 1 communicates with external space, and the person can insert or remove the first control board 101 through the first opening 2011, to maintain the first control board 101. For example, the person pulls the first control board 101 outward, and gradually pulls the first control board 101 out of the device cabinet 1, so that the first control board 101 can be dismounted. When the first control board 101 needs to be mounted, the first control board 101 is inserted into the first opening 2011, and the first control board 101 is pushed toward the inside of the first mounting bracket 201, so that mounting of the first control board 101 can be completed.

With reference to FIG. 6 and FIG. 7, the first switching component 411 and the first control board 101 are respectively mounted at different positions of the first mounting bracket 201, and the first mounting bracket 201 can enable the first switching component 411 and the first control board 101 to be arranged in a staggered manner in the width direction (the X-axis direction) of the device cabinet 1, or enable the first switching component 411 and the first control board 101 to be placed in a stacked manner in the width direction of the device cabinet 1. This improves utilization of the internal space of the device cabinet 1, and facilitates maintenance of the first switching component 411 and the first control board 101.

In addition, the first switching component 411 and the first control board 101 are fastened to the first mounting bracket 201. When the first switching component 411 and the first control board 101 in the device cabinet 1 need to be dismounted, the first switching component 411 and the first control board 101 may be dismounted separately, or the first switching component 411 and the first control board 101 may be integrally dismounted by dismounting the first mounting bracket 201.

In addition, another component on the first mounting bracket 201 is also dismounted or mounted. For example, a plurality of apparatuses or components (the first protective component 414, the first input metal busbar 412, the first output metal busbar 413, and the like) included in the first direct current power distribution apparatus 41 may be all mounted on the first mounting bracket 201, so that the first direct current power distribution apparatus 41 in the device cabinet 1 has higher integration, thereby greatly improving mounting efficiency and subsequent maintenance efficiency of the charging device 01. In a process of mounting the first direct current power distribution apparatus 41, the first direct current power distribution apparatus 41 may be first independently assembled. To be specific, the first switching component 411, the first protective component 414, the first input metal busbar 412, and the first output metal busbar 413 are all fastened to the first mounting bracket 201, and then the first mounting bracket 201 is mounted on the first side panel 11. In this way, the first direct current power distribution apparatus 41 can be integrally mounted on the first side panel 11. In a process of maintaining the first direct current power distribution apparatus 41, the first direct current power distribution apparatus 41 may be integrally dismounted and replaced in a manner of dismounting the first mounting bracket 201.

In some embodiments, with reference to FIG. 6, the charging device 01 further includes a first power supply apparatus 301. The first power supply apparatus 301 is configured to electrically connect to the power supply 02 and the first control board 101. The first power supply apparatus 301 is configured to perform power conversion on electric energy input by the power supply 02 and output the converted electric energy to the first control board 101, to supply power to the first control board 101. In the embodiment shown in FIG. 6, the first power supply apparatus 301 is located between the first switching component 411 and the first side panel 11 and is at least partially located in the first mounting bracket 201. For example, a part of the first power supply apparatus 301 is inserted into the first mounting bracket 201, the first mounting bracket 201 further has a second opening 2012 facing the first cabinet door 9, and the second opening 2012 is used for insertion of the first power supply apparatus 301 into the first mounting bracket 201 or removal of the first power supply apparatus 301 from the first mounting bracket 201. After the first cabinet door 9 is opened, the internal space of the device cabinet 1 communicates with the external space. The person pulls the first power supply apparatus 301 outward, and gradually pulls the first power supply apparatus 301 out of the device cabinet 1, so that the first power supply apparatus 301 can be dismounted. When the first power supply apparatus 301 needs to be mounted, the first power supply apparatus 301 is inserted into the second opening 2012, and the first power supply apparatus 301 is pushed toward the inside of the first mounting bracket 201 (the inserted first power supply apparatus 301 and the first mounting bracket 201 may be fastened by using a bolt), so that mounting of the first power supply apparatus 301 can be completed.

In some other embodiments, with reference to FIG. 7, the first power supply apparatus 301 is located outside the first mounting bracket 201, and the first power supply apparatus 301 is fastened to the side that is of the first mounting bracket 201 and that faces the first cabinet door 9. After the first cabinet door 9 is opened, the first power supply apparatus 301 faces the person, so that the person can maintain the first power supply apparatus 301.

In addition, in some embodiments, with reference to FIG. 7, the charging device 01 further includes a first electric meter 401. The first electric meter 401 is configured to display charging data of the first charging connector 51, to measure a charging amount of the charging device 01. The first electric meter 401 may detect the charging data of the first charging connector 51 in any appropriate manner. For example, the first direct current power distribution apparatus 41 further includes a first shunt 415, the first shunt 415 may be a metal busbar (for example, a copper busbar or an aluminum busbar), the first shunt 415 is fastened to the first input metal busbar 412 or the first output metal busbar 413, and the first shunt 415 is electrically connected to the first electric meter 401. The first electric meter 401 may determine, by detecting a current flowing through the first shunt 415, a magnitude of a current flowing through the first input metal busbar 412 or the first output metal busbar 413, to detect the charging data of the corresponding first charging connector 51.

The first electric meter 401 may be fastened at any appropriate position. In an embodiment, with reference to FIG. 6 or FIG. 7, the first electric meter 401 is fastened to a side that is of the first switching component 411 and that faces the first cabinet door 9. For example, when the charging device 01 includes the first mounting bracket 201, the first electric meter 401 is fastened to a side that is of the first mounting bracket 201 and that faces the first cabinet door 9, so that the first electric meter 401 is located on a side that is of the first switching component 411 and that faces the first cabinet door 9. After the first cabinet door 9 is opened, the person can intuitively observe a value of the first electric meter 401, and this also helps the person maintain the first electric meter 401.

In another embodiment, the charging device 01 further includes a second mounting bracket 202. FIG. 8 shows an example of a structure of the second mounting bracket 202. With reference to FIG. 8, the second mounting bracket 202 is located on a side that is of the first switching component 411 and that is away from the first cabinet door 9, one end of the second mounting bracket 202 in the width direction (the X-axis direction) of the device cabinet 1 is fastened to the first side panel 11, and the other end of the second mounting bracket 202 is fastened to the second side panel 12. The first electric meter 401 is fastened to a side that is of the second mounting bracket 202 and that faces the first cabinet door 9, and the first electric meter 401 and the first switching component 411 are disposed in a staggered manner in the width direction of the device cabinet 1. The first electric meter 401 and the first switching component 411 are disposed in the staggered manner in the width direction of the device cabinet 1, so that a thickness of the device cabinet 1 can be reduced. In addition, after the first cabinet door 9 is opened, the first switching component 411 does not shield the first electric meter 401, so that the first electric meter 401 can be observed and inspected without dismounting the first switching component 411.

It should be noted that mounting manners of the first switching component 411, the first control board 101, the first power supply apparatus 301, and the first electric meter 401 shown in FIG. 6 to FIG. 8 may be used in any combination. For example, in the charging device 01, the first control board 101 is mounted on the first mounting bracket 201 in the solution of FIG. 6, the first power supply apparatus 301 is mounted on the first mounting bracket 201 in the manner of FIG. 7, and the first electric meter 401 is mounted on the second mounting bracket 202 in the solution of FIG. 8.

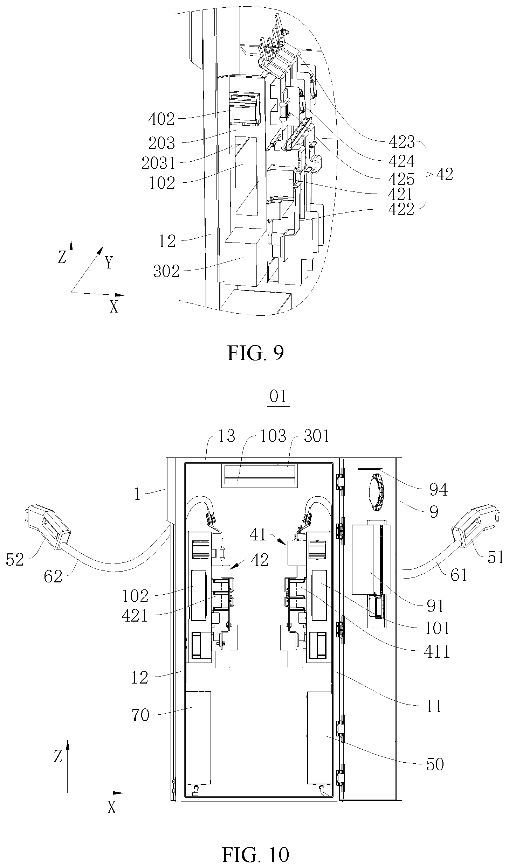

In some embodiments, with reference to FIG. 8, the direct current power distribution apparatus 4 in the charging device 01 further includes a second direct current power distribution apparatus 42. The second direct current power distribution apparatus 42 is mounted on the second side panel 12 in the device cabinet 1. After the first cabinet door 9 is opened, the second direct current power distribution apparatus 42 may be maintained from a side facing the second side panel 12. FIG. 9 shows an example of a structure of the second direct current power distribution apparatus 42. With reference to FIG. 9, the second direct current power distribution apparatus 42 includes a plurality of second switching components 421, the plurality of second switching components 421 are located in the device cabinet 1 and are fastened to the second side panel 12, and the plurality of second switching components 421 are arranged along the thickness direction (the Y-axis direction) of the device cabinet 1.

In some embodiments, to reduce space occupied by the plurality of second switching components 421 in the thickness direction of the device cabinet 1, two adjacent second switching components 421 may be arranged in a staggered manner in the height direction (the Z-axis direction) of the device cabinet 1. In some other embodiments, two adjacent second switching components 421 are not disposed in the staggered manner.

In some embodiments, with reference to FIG. 8, the second direct current power distribution apparatus 42 further includes a plurality of second input metal busbars 422 (for example, copper busbars or aluminum busbars) and a plurality of second output metal busbars 423 (for example, copper busbars or aluminum busbars). Each second input metal busbar 422 is electrically connected to an input end of a corresponding second switching component 421, and each second output metal busbar 423 is electrically connected to an output end of a corresponding second switching component 421. In addition, in some embodiments, the second direct current power distribution apparatus 42 further includes a plurality of second protective components 424 (for example, fuses). The second protective component 424 is fastened between an output end of a second switching component 421 and a second output metal busbar 423, or the second protective component 424 is fastened between an input end of a second switching component 421 and a second input metal busbar 422.

With reference to FIG. 8, the charging connector 5 further includes a second charging connector 52 configured to connect to the second switching component 421, and the cable 6 further includes a second cable 62 configured to connect the second charging connector 52 and at least one second switching component 421. In other words, the at least one second switching component 421 is connected to the second charging connector 52 via the second cable 62. The second cable 62 passes through the device cabinet 1, so that a part of the second cable 62 is located in the device cabinet 1, and the other part is located outside the device cabinet 1. The part that is of the second cable 62 and that is located in the device cabinet 1 is electrically connected to output ends of the plurality of second switching components 421. For details, refer to a connection manner of the first cable 61 and the plurality of first switching components 411. Details are not described herein again.

The input end of the second switching component 421 is electrically connected to the power supply 02. When the second direct current power distribution apparatus 42 includes a plurality of second input metal busbars 422 and a plurality of second output metal busbars 423, the power supply 02 is electrically connected to the second input metal busbars 422. After power conversion is performed on a current provided by the power supply 02, the current is transferred to the second switching component 421 through the second input metal busbar 422. When the second switching component 421 is turned on, the second switching component 421 allows the current to be output from the output end of the second switching component 421. The current output from the output end of the second switching component 421 flows to the second cable 62 after passing through the second output metal busbar 423, is transferred to the corresponding second charging connector 52 via the second cable 62, and then is used to charge the to-be-charged device through the second charging connector 52.

In addition, the charging device 01 further includes a second control board 102. The second control board 102 is located in the device cabinet 1 and is fastened to the second side panel 12. The second control board 102 is electrically connected to the second switching component 421 and is configured to control turn-on and turn-off of the second switching component 421. The second control board 102 includes a circuit board and a plurality of electronic components (including a control chip), and the plurality of electronic components of the second control board 102 are fastened to the circuit board of the second control board 102.

The second control board 102 is disposed on the second side panel 12, so that the second control board 102 is disposed close to the second switching component 421. This facilitates a connection between the second control board 102 and the second switching component 421, and shortens a length of a connection structure (for example, an electrical wire or a copper busbar) between the second control board 102 and the second switching component 421. In this way, the device cabinet 1 has larger space for mounting more apparatuses and devices, and a high-density layout in the device cabinet 1 is implemented.

The second switching component 421 and the second control board 102 may be mounted on the second side panel 12 in any appropriate manner. For example, with reference to FIG. 8, the charging device 01 further includes a third mounting bracket 203. The third mounting bracket 203 may be disposed based on a requirement. For example, the third mounting bracket 203 is formed by bending a metal plate, or the third mounting bracket 203 is formed by a plurality of metal rods that are fastened and overlapped with each other. In some embodiments, the third mounting bracket 203 has a same structure as the first mounting bracket 201. The third mounting bracket 203 is fastened to the second side panel 12, and the second switching component 421 is fastened to a side that is of the third mounting bracket 203 and that is away from the second side panel 12. After the first cabinet door 9 is opened, this helps the person maintain the second switching component 421.

In an embodiment, with reference to FIG. 8, the second control board 102 is fastened to a side that is of the third mounting bracket 203 and that faces the first cabinet door 9. After the first cabinet door 9 is opened, the person can maintain the second control board 102 when facing the inside of the device cabinet 1.

In another embodiment, with reference to FIG. 9, a third mounting bracket 203 in FIG. 9 is different from the third mounting bracket 203 in FIG. 8. With reference to FIG. 9, the second control board 102 is at least partially located in the third mounting bracket 203 and disposed between the second switching component 421 and the second side panel 12. For example, the second control board 102 is entirely located in the third mounting bracket 203. In this embodiment, the second control board 102 may be fastened to the third mounting bracket 203 by using a fastener such as a bolt, and the second control board 102 may also be fastened to the second side panel 12 by using a fastener such as a bolt. The third mounting bracket 203 has a third opening 2031 facing the first cabinet door 9 (for a position of the first cabinet door 9, refer to FIG. 8), and the third opening 2031 is used for insertion of the second control board 102 into the third mounting bracket 203 or removal of the second control board 102 from the third mounting bracket 203. The third opening 2031 for mounting or dismounting the second control board 102 faces the first cabinet door 9. After the first cabinet door 9 is opened, the person can insert or remove the second control board 102 through the third opening 2031, to maintain the second control board 102.

With reference to FIG. 8 and FIG. 9, the second switching component 421 and the second control board 102 are respectively mounted at different positions of the third mounting bracket 203. This improves utilization of the internal space of the device cabinet 1, and facilitates maintenance of the second switching component 421 and the second control board 102.

In addition, in some embodiments, with reference to FIG. 8 and FIG. 9, other apparatuses or components (the second input metal busbar 422, the second output metal busbar 423, the second protective component 424, and the like) included in the second direct current power distribution apparatus 42 are all mounted on the third mounting bracket 203, so that the second direct current power distribution apparatus 42 in the device cabinet 1 has higher integration, thereby greatly improving mounting efficiency and subsequent maintenance efficiency of the charging device 01.

In some embodiments, with reference to FIG. 8, the charging device 01 further includes a second power supply apparatus 302. The second power supply apparatus 302 is configured to electrically connect to the power supply 02 and the second control board 102. The second power supply apparatus 302 is configured to perform power conversion on electric energy input by the power supply 02 and output the converted electric energy to the second control board 102, to supply power to the second control board 102. In the embodiment shown in FIG. 8, the second power supply apparatus 302 is at least partially located in the third mounting bracket 203 and disposed between the second switching component 421 and the second side panel 12. For example, a part of the second power supply apparatus 302 is inserted into the third mounting bracket 203. The third mounting bracket 203 further has a fourth opening 2032 facing the first cabinet door 9, and the fourth opening 2032 is used for insertion of the second power supply apparatus 302 into the third mounting bracket 203 or removal of the second power supply apparatus 302 from the third mounting bracket 203.

In some other embodiments, with reference to FIG. 9, the second power supply apparatus 302 is located outside the third mounting bracket 203, and the second power supply apparatus 302 is fastened to the side that is of the third mounting bracket 203 and that faces the first cabinet door 9 (for a position of the first cabinet door 9, refer to FIG. 8). After the first cabinet door 9 is opened, the second power supply apparatus 302 faces the person, so that the person can maintain the second power supply apparatus 302.

In addition, in some embodiments, with reference again to FIG. 8, the charging device 01 further includes a second electric meter 402. The second electric meter 402 is configured to display charging data of the second charging connector 52, to measure a charging amount of the charging device 01. The second electric meter 402 may detect the charging data of the second charging connector 52 in any appropriate manner. For example, the second direct current power distribution apparatus 42 further includes a second shunt 425, the second shunt 425 may be a metal busbar (for example, a copper busbar or an aluminum busbar), the second shunt 425 is fastened to the second input metal busbar 422 or the second output metal busbar 423, and the second shunt 425 is electrically connected to the second electric meter 402. The second electric meter 402 may determine, by detecting a current flowing through the second shunt 425, a magnitude of a current flowing through the second input metal busbar 422 or the second output metal busbar 423, to detect the charging data of the corresponding second charging connector 52.

The second electric meter 402 may be fastened at any appropriate position. In an embodiment, with reference to FIG. 8, the second electric meter 402 is fastened to the side that is of the second mounting bracket 202 and that faces the first cabinet door 9, and the second electric meter 402 and the second switching component 421 are disposed in a staggered manner in the width direction (the X-axis direction) of the device cabinet 1, so that a thickness of the device cabinet 1 is reduced, and the second switching component 421 does not shield the second electric meter 402. In the embodiment shown in FIG. 8, the first electric meter 401 and the second electric meter 402 are arranged along the height direction of the device cabinet 1. In another embodiment, with reference to FIG. 9, the second electric meter 402 is fastened to a side that is of the second switching component 421 and that faces the first cabinet door 9. For example, when the charging device 01 includes the third mounting bracket 203, the second electric meter 402 is fastened to a side that is of the third mounting bracket 203 and that faces the first cabinet door 9, so that the second electric meter 402 is located on a side that is of the second switching component 421 and that faces the first cabinet door 9. After the first cabinet door 9 is opened, the person can intuitively observe a value of the second electric meter 402, and this also helps the person maintain the second electric meter 402.

It should be noted that mounting manners of the second switching component 421, the second control board 102, the second power supply apparatus 302, and the second electric meter 402 shown in FIG. 8 and FIG. 9 may be used in any combination. For example, in the charging device 01, the second control board 102 is mounted on the third mounting bracket 203 in the solution of FIG. 8, the second power supply apparatus 302 is mounted on the third mounting bracket 203 in the manner of FIG. 9, and the second electric meter 402 is mounted on the second mounting bracket 202 in the solution of FIG. 8.

Structures such as the first switching component 411 and the first control board 101 are mounted on the first side panel 11, and structures such as the second switching component 421 and the second control board 102 are mounted on the second side panel 12. A two-side layout manner is used in the device cabinet 1, so that a plurality of components and apparatuses each have sufficient space for direct dismounting and maintenance.

In some embodiments, only one power supply apparatus may be disposed to supply power to the first control board 101 and the second control board 102, so that a quantity of power supply apparatuses in the device cabinet 1 is reduced, and the internal space of the device cabinet 1 is saved. For example, FIG. 10 shows an example of a structure of a first power supply apparatus 301. With reference to FIG. 10, different from the foregoing plurality of first power supply apparatuses 301, the first power supply apparatus 301 is located in the device cabinet 1 and is fastened to the top panel 13 (for example, fastened to the top panel 13 by using a support or a mounting bracket). In addition, the first power supply apparatus 301 is configured to electrically connect to the power supply 02, the first control board 101, and the second control board 102, and the first power supply apparatus 301 is configured to perform power conversion on electric energy input by the power supply 02 and output the electric energy to the first control board 101 and the second control board 102, to supply power to the first control board 101 and the second control board 102. In addition, the first power supply apparatus 301 may be further electrically connected to the display 91 and supply power to the display 91. The first power supply apparatus 301 is disposed on the top of the device cabinet 1, so that it is more convenient for the first power supply apparatus 301 to be externally wired. In some embodiments, the first power supply apparatus 301 can slide relative to the device cabinet 1 in a direction toward or away from the first cabinet door 9, so that the first power supply apparatus 301 is mounted when plugged in and is dismounted when unplugged.

In some embodiments, the first control board 101 and the second control board 102 can be further used for communication between the to-be-charged device (for example, a vehicle) and the charging device 01, including interaction of a vehicle voltage, a current, an alarm signal, and the like.

In addition, with reference again to FIG. 8, the charging device 01 further includes a third control board 103. The third control board 103 includes a circuit board and a plurality of electronic components (including a control chip), and the plurality of electronic components of the third control board 103 are fastened to the circuit board of the third control board 103. The third control board 103 is electrically connected to the display 91, and the third control board 103 is fastened to the first cabinet door 9. For example, the third control board 103 is fastened to a support, and the support is fastened to the first cabinet door 9. With support of the support, the third control board 103 is located on a side that is of the display 91 and that is away from the first cabinet door 9. The third control board 103 is disposed close to the display 91, to facilitate connection between the third control board 103 and the display 91. In addition, with reference to FIG. 10, the third control board 103 may alternatively be disposed on the top (the top panel 13) of the device cabinet 1, to fully utilize the internal space of the device cabinet 1, and enable the internal layout of the device cabinet 1 to be more reasonable. When the charging device 01 includes a main part and a terminal part, the third control board 103 is further configured to communicate with the terminal part.

In some other embodiments, the third control board 103 is disposed on the top panel 13 of the device cabinet 1, the first control board 101 is fastened to the first side panel 11, and the second control board 102 is fastened to the first side panel 11.

In some embodiments, with reference again to FIG. 8, the first cabinet door 9 has a first water baffle 94, the first water baffle 94 extends toward the internal space of the device cabinet 1 (with reference to a closed state of the first cabinet door 9), and the first water baffle 94 is located above the display 91. When the third control board 103 is mounted on the first cabinet door 9, the first water baffle 94 is also located above the third control board 103. After the first cabinet door 9 is opened, the first water baffle 94 can block and intercept liquid dripping from the top of the first cabinet door 9 to some extent. This reduces a possibility of short-circuit damage to the display 91 and the third control board 103 caused by the liquid dripping from the top of the first cabinet door 9.

In some embodiments, the charging device 01 is configured to charge 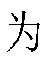 a to-be-charged device that requires high-power fast charging, such as a heavy truck. The first cable 61 carries a high current, so that the first cable 61 needs to be cooled. The first cable 61 has a channel for a cooling medium to flow. With reference to FIG. 10, the charging device 01 further includes a first cooling assembly 50. The first cooling assembly 50 is connected to the first side panel 11 and is located below the first switching component 411. The first cooling assembly 50 is externally connected to a cooling source 03, and is configured to provide the cooling medium for the first cable 61 and drive the cooling medium to flow.

The first cooling assembly 50 is disposed below the first switching component 411, so that when the first cooling assembly 50 is faulty and causes liquid leakage (for example, leakage of the cooling medium), a possibility that the cooling medium is in contact with the first switching component 411 can be reduced, and a risk that the first switching component 411 is faulty can be reduced. In addition, the first cooling assembly 50 needs to be externally connected to the cooling source 03, and the first cooling assembly 50 is disposed below the first switching component 411, so that a length of a pipe for externally connecting to the cooling source 03 can also be reduced. In addition, in some cases, the first cooling assembly 50 is heavy, and the first cooling assembly 50 is mounted at a low position (lower than the first switching component 411) in the device cabinet 1, so that a safety risk caused in a process of mounting the first cooling assembly 50 is reduced.

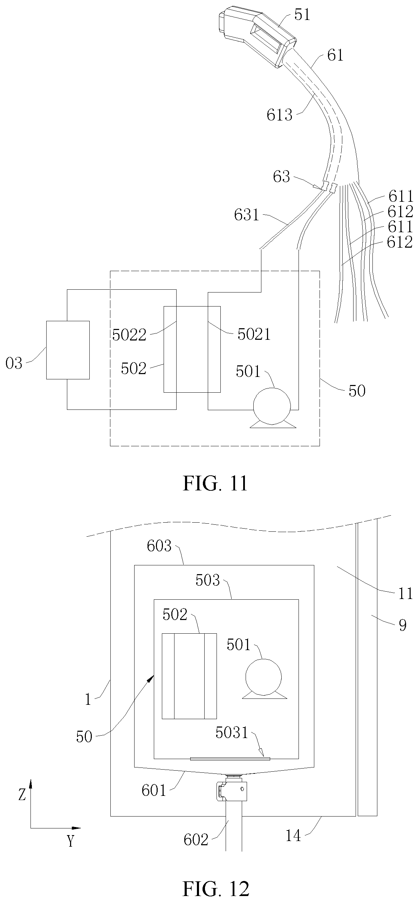

The first cooling assembly 50 may be any appropriate structure having the foregoing functions. For example, FIG. 11 shows an example of a structure of the first cooling assembly 50. With reference to FIG. 10 and FIG. 11, the first cooling assembly 50 includes a first driving piece 501 (for example, a water pump) and a first heat exchanger 502 (for example, a plate heat exchanger), and the first heat exchanger 502 has a first heat exchange channel 5021 and a second heat exchange channel 5022. The first cable 61 has a cooling channel 613 for a cooling medium to flow. The first heat exchange channel 5021 communicates with the cooling channel 613, the second heat exchange channel 5022 is configured to connect to the cooling source 03 outside the device cabinet 1, the first driving piece 501 communicates with the first heat exchange channel 5021 and the cooling channel 613, and the first driving piece 501 is configured to drive the cooling medium to circulate between the first heat exchange channel 5021 and the cooling channel 613. After entering the cooling channel 613 from the first heat exchange channel 5021, the cooling medium absorbs heat of the first cable 61. The cooling medium that absorbs the heat flows out of the cooling channel 613 and enters the first heat exchange channel 5021 of the first heat exchanger 502. The cooling medium in the first heat exchange channel 5021 exchanges heat with a cooling source medium from the cooling source 03 in the second heat exchange channel 5022. A temperature of the cooling medium decreases after heat exchange, and the cooling medium returns to the cooling channel 613 to cool the first cable 61. This process is repeated, to implement circulating cooling on the first cable 61.

It should be noted that the cooling source 03 is located outside the device cabinet 1 (refer to FIG. 4), and communicates with the first cooling assembly 50 via a pipe. The first cooling assembly 50 may communicate with the cooling source 03 to cool the cooling medium. There is no need to dispose the cooling source 03 in the device cabinet 1, and there is no need to provide an air vent on the device cabinet 1 (if the cooling source 03 is disposed in the device cabinet, an air vent needs to be provided on the device cabinet 1 to cool the cooling source 03, for example, cool a condenser of the cooling source 03). This improves a protection level of the device cabinet 1, and reduces a possibility that external impurities enter the device cabinet 1.

In addition, in some embodiments, the first cooling assembly 50 further includes a liquid storage tank configured to accommodate the cooling medium, a liquid level sensor and a water temperature sensor that are at least partially located in the liquid storage tank, and the like. This is not limited in this application.

Because a medium (for example, the cooling source medium from the cooling source 03) with a low temperature flows in the first heat exchanger 502, and an ambient temperature inside the device cabinet 1 in which the first cooling assembly 50 is located is high, condensate water may appear on the first heat exchanger 502 (condensate water may also appear on the first driving piece 501). If no structure for discharging condensate water is disposed, a large amount of condensate water is accumulated in the device cabinet 1. In some embodiments, the charging device 01 further includes a first receiving seat 601 and a first liquid discharge channel 602. FIG. 12 shows an example of a structure of the first receiving seat 601 and the first liquid discharge channel 602. The first receiving seat 601 is located below the first heat exchanger 502 (or may be located below the first driving piece 501), and the first receiving seat 601 is configured to receive liquid from the first heat exchanger 502. A liquid inlet of the first liquid discharge channel 602 is configured to communicate with the first receiving seat 601, and a liquid outlet of the second liquid discharge channel 605 is configured to communicate with external space of the device cabinet 1. Condensate water in the first receiving seat 601 can be discharged out of the device cabinet 1 via the first liquid discharge channel 602, so that an amount of condensate water accumulated in the device cabinet 1 is reduced.

In some embodiments, the first receiving seat 601 may be a base of a funnel-shaped pile. In some other embodiments, the first receiving seat 601 may alternatively be a part of another structure. For example, with reference to FIG. 12, the charging device 01 further includes a fastening base 603. The fastening base 603 is fastened to the first side panel 11, the first cooling assembly 50 is located in the fastening base 603, and the first receiving seat 601 is a bottom structure of the fastening base 603.

In some other embodiments, with reference to FIG. 12, the first cooling assembly 50 further includes an assembly housing 503, the first driving piece 501 and the first heat exchanger 502 are both located in the assembly housing 503, the assembly housing 503 is mounted in the fastening base 603, and the assembly housing 503 can slide relative to the fastening base 603 in the direction toward or away from the first cabinet door 9. When the first cooling assembly 50 is maintained, after the first cabinet door 9 is opened, the assembly housing 503 can move relative to the device cabinet 1 in a manner such as pulling. Then, the assembly housing 503 is gradually pulled out of the device cabinet 1, and apparatuses such as the first heat exchanger 502 and the first driving piece 501 in the assembly housing 503 are inspected or replaced. This facilitates maintenance of the first cooling assembly 50, and can reduce working time required for maintaining the first cooling assembly 50. After maintenance of the first cooling assembly 50 is completed, the assembly housing 503 is pushed into the fastening base 603 until the assembly housing 503 is mounted and appropriately seated. In this way, remounting of the first cooling assembly 50 is completed.

With reference to FIG. 12, there is a liquid discharge hole 5031 at the bottom of the assembly housing 503. After the condensate water from the first heat exchanger 502 drips onto the bottom of the assembly housing 503, the condensate water flows to the first receiving seat 601 through the liquid discharge hole 5031, and the condensate water in the first receiving seat 601 is discharged out of the device cabinet 1 via the first liquid discharge channel 602.

It should be noted that the first liquid discharge channel 602 may be any channel structure that can discharge liquid. For example, a pipe structure communicates with the bottom of the first receiving seat 601, and the first liquid discharge channel 602 includes an internal channel of the pipe structure.

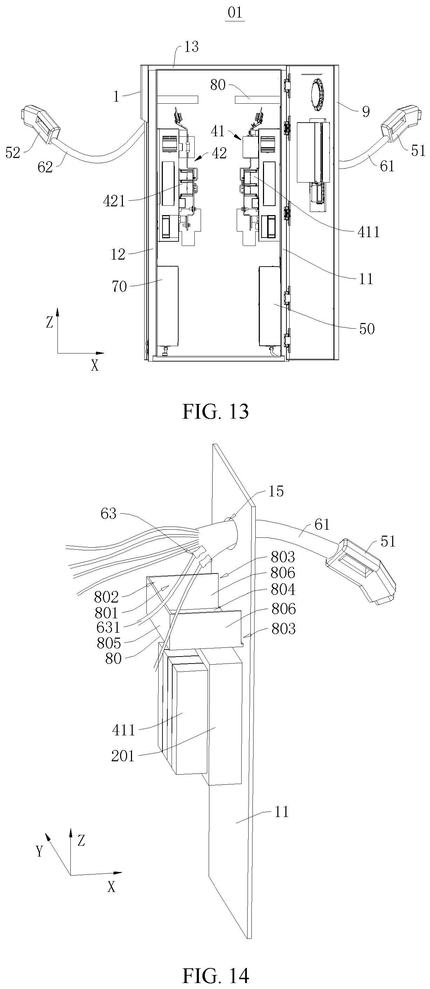

In addition, in some embodiments, the second cable 62 also has a channel for a cooling medium to flow (a structure is the same as or similar to that of the cooling channel 613). With reference to FIG. 13, the charging device 01 further includes a second cooling assembly 70. FIG. 13 shows an example of a structure of the second cooling assembly 70. The second cooling assembly 70 is connected to the second side panel 12 and is located below the second switching component 421. The second cooling assembly 70 is externally connected to the cooling source 03, and is configured to provide the cooling medium for the channel for the cooling medium to flow in the second cable 62, and drive the cooling medium to flow.

The second cooling assembly 70 may be any appropriate structure having the foregoing functions. For example, the second cooling assembly 70 includes a second driving piece (for example, a water pump) and a second heat exchanger (similar to or the same as the first heat exchanger 502), and the second cooling assembly 70 may be the same as the first cooling assembly 50, to implement circulating cooling on the second cable 62. Details are not described herein again.

In addition, in some embodiments, the charging device 01 further includes a structure for discharging condensate water from the second heat exchanger. For example, the charging device 01 further includes a third receiving seat (same as or similar to the first receiving base) and a third liquid discharge channel (same as or similar to the first liquid discharge channel 602), to reduce an amount of condensate water accumulated in the device cabinet 1. Details are not described herein again.

To enable the first cable 61 to communicate with the first cooling assembly 50, a part that is of the first cable 61 and that is located in the device cabinet 1 has an interface 63 that communicates with the cooling channel 613. FIG. 14 shows an example of a structure of the interface 63. With reference to FIG. 14, the interface 63 is located above the first switching component 411, and the interface 63 communicates with the first heat exchange channel 5021 via a cooling pipe 631 (refer to FIG. 11). In some embodiments, with reference to FIG. 13 and FIG. 14, the charging device 01 further includes a blocking piece 80. The blocking piece 80 is fastened to the first side panel 11 and extends toward a side that is away from the first side panel 11. In addition, at least a part of the blocking piece 80 is located between the interface 63 and the first switching component 411. The blocking piece 80 is configured to block liquid from the interface 63 from flowing to the first switching component 411.

The blocking piece 80 may be any structure that can implement the foregoing functions. In an embodiment, with reference to FIG. 13, the blocking piece 80 may be a plate-like structure, and one end that is of the blocking piece 80 and that is away from the first side panel 11 extends toward a side that is of the first switching component 411 and that is away from the first side panel 11, so that the blocking piece 80 can completely cover the first switching component 411.

In another embodiment, with reference to FIG. 14, the blocking piece 80 has an accommodating cavity 801 and a cavity opening 802 that communicates with the accommodating cavity 801. The cavity opening 802 is provided away from the first switching component 411, and the cavity opening 802 is located below the interface 63 and is used to receive liquid from the interface 63. In addition, the blocking piece 80 further has an overflow opening 803 that communicates with the accommodating cavity 801. The overflow opening 803 is located below the cavity opening 802. In the width direction of the device cabinet 1, the overflow opening 803 is located between the first switching component 411 and the first side panel 11. For example, when the charging device 01 includes the first mounting bracket 201, the overflow opening 803 is located right above the first mounting bracket 201, and the overflow opening 803 is used to discharge liquid in the accommodating cavity 801. Liquid dripping from the overflow opening 803 drips onto the first mounting bracket 201, but does not drip onto the first switching component 411, so that a possibility of damage to the first switching component 411 is reduced.

The blocking piece 80 shown in FIG. 14 may be formed by splicing a plurality of plates. For example, the blocking piece 80 includes a first baffle 804, a second baffle 805, and two third baffles 806. A plate surface of the first baffle 804 is parallel to a horizontal plane, and the first baffle 804 is located between the interface 63 and the first switching component 411. The second baffle 805 is fastened to the first baffle 804 and arranged with the first side panel 11 along the width direction (the X-axis direction) of the device cabinet 1, and the second baffle 805 protrudes toward a side that is of the first baffle 804 and that is away from the first switching component 411. The two third baffles 806 are arranged along the thickness direction (the Y-axis direction) of the device cabinet 1, and the two third baffles 806 are both fastened to the first baffle 804 and protrude toward the side that is of the first baffle 804 and that is away from the first switching component 411. The first baffle 804, the second baffle 805, and the two third baffles 806 enclose the accommodating cavity 801. In addition, there is a gap between each third baffle 806 and the first side panel 11, and the gap is the overflow opening 803.

In some other embodiments, the overflow opening 803 may alternatively be provided at the bottom of the blocking piece 80.

In addition, a structure similar to that of the blocking piece 80 may also be disposed on the second side panel 12, to reduce a possibility that the cooling medium in the second cable 62 drips onto the second switching component 421. Details are not described herein again in this application.

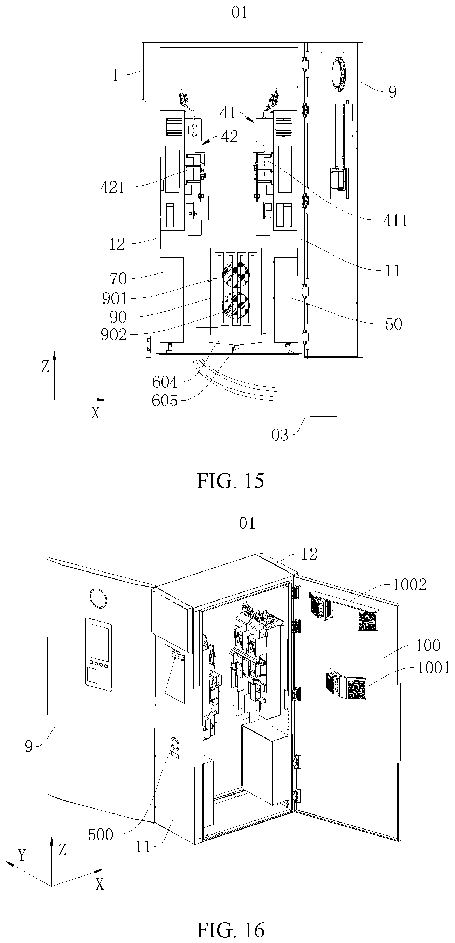

Because some components in the device cabinet 1 generate heat in a use process, heat inside the device cabinet 1 increases, and a risk (for example, accelerating aging of a component or a short circuit) may exist due to an excessively high temperature in the device cabinet 1. Therefore, in some examples, the charging device 01 further includes a heat dissipator 90. FIG. 15 shows an example of a structure of the heat dissipator 90. With reference to FIG. 15, the heat dissipator 90 is fastened in the device cabinet 1, the heat dissipator 90 has a heat dissipation channel 901, the heat dissipation channel 901 is configured to connect to the cooling source 03 outside the device cabinet 1, and the heat dissipator 90 is configured to exchange heat with air inside the device cabinet 1. When the temperature inside the cabinet is excessively high, a medium (the cooling source medium from the cooling source 03) with a cooling function is introduced into the heat dissipation channel 901 of the heat dissipator 90, and the cooling source medium flows in the heat dissipation channel 901 and exchanges heat with the air inside the device cabinet 1, so that the internal temperature of the device cabinet 1 is reduced. The heat dissipator 90 may be any component that has the heat dissipation channel 901 and that can exchange heat with the air inside the device cabinet 1, for example, a plate heat exchanger or a tubular heat exchanger.

In the example shown in FIG. 15, when the device cabinet 1 has the first cooling assembly 50 and the second cooling assembly 70, the heat dissipator 90 is disposed between the first cooling assembly 50 and the second cooling assembly 70. In some other examples, when the first cooling assembly 50 is disposed in the device cabinet 1 and no second cooling assembly 70 is disposed, the heat dissipator 90 is disposed on a side of the first cooling assembly 50 in the width direction (the X-axis direction) of the device cabinet 1.

In addition, the charging device 01 further includes a heat dissipation fan 902 (a shadow part refers to the heat dissipation fan 902) disposed in the device cabinet 1. The heat dissipation fan 902 is disposed on a side of the heat dissipator 90 (for example, a side of the heat dissipator 90 in the thickness direction of the device cabinet 1). The heat dissipation fan 902 is configured to drive air to flow through the heat dissipator 90. The heat dissipation fan 902 may blow air toward the heat dissipator 90, or the heat dissipation fan 902 may draw air.

Because a medium (for example, the cooling source medium from the cooling source 03) with a low temperature flows in the heat dissipator 90, and the ambient temperature in the device cabinet 1 is high, condensate water may appear on the heat dissipator 90. In some embodiments, the charging device 01 further includes a second receiving seat 604 and a second liquid discharge channel 605, the second receiving seat 604 is located below the heat dissipator 90, and the second receiving seat 604 is configured to receive liquid from the heat dissipator 90. A liquid inlet of the second liquid discharge channel 605 is configured to communicate with the second receiving seat 604, and a liquid outlet of the second liquid discharge channel 605 is configured to communicate with the external space of the device cabinet 1. Through disposition of the second receiving seat 604, the condensate water dripping from the heat dissipator 90 can be received, and the condensate water is discharged out of the device cabinet 1 via the second liquid discharge channel 605, so that a possibility of condensation water accumulating in the device cabinet 1 is reduced.

The second receiving seat 604 may be any structure that can receive condensate water. For example, with reference to FIG. 15, the second receiving seat 604 may be a base of a funnel-shaped pile. In some other embodiments, the second receiving seat 604 may alternatively be a part of another structure. For example, the heat dissipator 90 is located in a housing, and a bottom of the housing is the second receiving seat 604. In addition, the second liquid discharge channel 605 may be any channel structure that can discharge liquid. For example, a pipe structure communicates with the bottom of the second receiving seat 604, and the second liquid discharge channel 605 includes an internal channel of the pipe structure.

The charging device 01 further includes a second cabinet door 100. FIG. 16 shows an example of the second cabinet door 100. With reference to FIG. 16, the second cabinet door 100 and the first cabinet door 9 are respectively located on different sides of the device cabinet 1 in the thickness direction of the device cabinet 1. The second cabinet door 100 is connected to the second side panel 12 or the first side panel 11. FIG. 1 shows a case in which the second cabinet door 100 is connected to the second side panel 12. In addition, the second cabinet door 100 can rotate relative to the device cabinet 1. For example, the second cabinet door 100 is hinged (connected via a hinge) to the second side panel 12. The second cabinet door 100 can open or seal the device cabinet 1. The second cabinet door 100 may be used for auxiliary inspection. In some cases (for example, when an inspection requirement cannot be met by opening only the first cabinet door 9), the person may also open the second cabinet door 100 to maintain an apparatus in the device cabinet 1, so that flexibility of maintaining the charging device 01 by the person is improved.

In some embodiments, with reference to FIG. 16, the charging device 01 further includes a mixing fan 1001. The mixing fan 1001 is located in the device cabinet 1 and is fastened to the second cabinet door 100. The mixing fan 1001 is configured to blow air into the device cabinet 1. For example, the mixing fan 1001 blows air to a part that generates high heat in the device cabinet 1, so that a local hot spot inside the device cabinet 1 can be eliminated, and the internal temperature of the device cabinet 1 is uniform. The mixing fan 1001 is disposed on the second cabinet door 100, so that space on the second cabinet door 100 is fully utilized, and a layout in the device cabinet 1 is more reasonable. The first side panel 11, the second side panel 12, the first cabinet door 9, and the second cabinet door 100 are all used as mounting surfaces of components and apparatuses, so that utilization of the internal space of the device cabinet 1 is improved.

When the mixing fan 1001 is disposed on the second cabinet door 100, with reference to FIG. 16, the second cabinet door 100 further has a second water baffle 1002, the second water baffle 1002 is fastened to the second cabinet door 100, the second water baffle 1002 extends toward the internal space of the device cabinet 1 (refer to a closed state of the second cabinet door 100), and the second water baffle 1002 is located above the mixing fan 1001. After the second cabinet door 100 is opened, because the second water baffle 1002 exists, liquid dripping from a top of the second cabinet door 100 may be blocked and intercepted to some extent, so that a possibility of damage to the mixing fan 1001 caused by the liquid dripping from the top of the second cabinet door 100 is reduced.

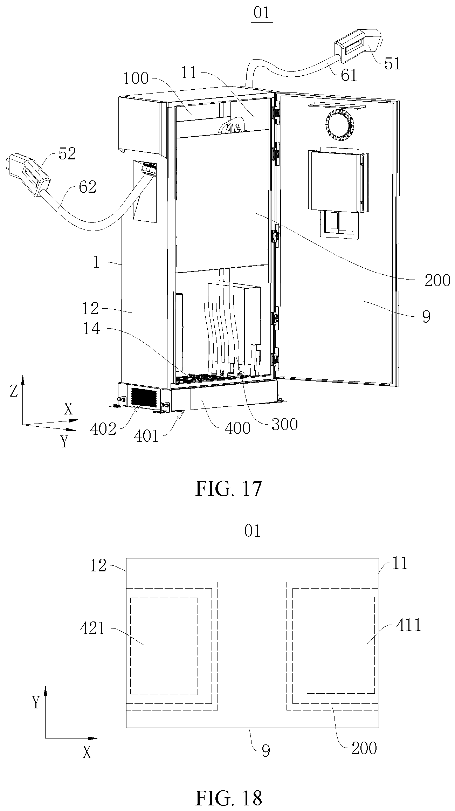

In some other embodiments, the charging device 01 further includes a structure that can shield the first switching component 411. For example, the charging device 01 further includes a protective cover 200. FIG. 17 shows an example of a structure of the protective cover 200. With reference to FIG. 17, the protective cover 200 is fastened in the device cabinet 1, and the protective cover 200 is located on a side that is of the plurality of first switching components 411 (shielded by the protective cover 200 in FIG. 17) and that faces the first cabinet door 9. The protective cover 200 is configured to shield the first direct current power distribution apparatus 41 (including the plurality of first switching components 411). In other words, after the first cabinet door 9 is opened, the protective cover 200 prevents the first direct current power distribution apparatus 41 from being exposed. In this way, the person can be protected, the first direct current power distribution apparatus 41 can be protected, and the device cabinet 1 can be tidier.

The protective cover 200 may be fastened in the device cabinet 1 in any appropriate manner. In the embodiment shown in FIG. 17, a side portion that is of the protective cover 200 and that is close to the first side panel 11 is fastened to the first side panel 11 (for example, fastened by using a bolt), and a side portion that is of the protective cover 200 and that is close to the second side panel 12 is fastened to the second side panel 12 (for example, fastened by using a bolt). In some other embodiments, the protective cover 200 is fastened (for example, by using a bolt) on the first side panel 11, and the protective cover 200 is not connected to the second side panel 12. Alternatively, the protective cover 200 is fastened (for example, by using a bolt) on the second side panel 12, and the protective cover 200 is not connected to the first side panel 11. When the first switching component 411 needs to be inspected, the protective cover 200 may be dismounted.

When the charging device 01 further includes the second cabinet door 100, a protective structure similar to the protective cover 200 (the same as or similar to the structure of the protective cover 200) may also be disposed on a side that is of the first switching component 411 and that faces the second cabinet door 100. That is, when the second cabinet door 100 is opened, the protective structure can also shield the first direct current power distribution apparatus 41.

FIG. 18 shows an example of a structure of the protective cover 200. FIG. 18 is a top view of the charging device 01. With reference to FIG. 18, the protective cover 200 is fastened in the device cabinet 1 and is located on the side that is of the first switching component 411 and that is away from the first side panel 11. For example, the protective cover 200 is fastened to the first side panel 11. For another example, when the charging device 01 includes the first mounting bracket 201, the protective cover 200 is fastened to the first mounting bracket 201. The protective cover 200 is disposed over the first switching component 411. The first switching component 411 can be protected by using the protective cover 200. In addition, a protective structure similar to the protective cover 200 (the same as or similar to the structure of the protective cover 200) may also be disposed on a side that is of the second switching component 421 and that is away from the second cabinet door 100, and the protective structure is disposed over the second switching component 421.

In some embodiments, the first switching component 411 (and the second switching component 421) is connected to the power supply 02 via a wire. For example, with reference again to FIG. 4 and FIG. 5, the charging device 01 further includes a third cable 300. The third cable 300 passes through the bottom panel 14. A part of the third cable 300 is located in the device cabinet 1 and is connected to the input end of the first switching component 411. The other part of the third cable 300 is located outside the device cabinet 1 and is configured to connect to the power supply 02. When the device cabinet 1 is mounted, a groove for placing a wire (for example, the third cable 300) is usually provided at a mounting position of the device cabinet 1. For example, a groove is provided on the ground. Because the third cable 300 needs to pass through the bottom panel 14 of the device cabinet 1, an opening for the third cable 300 to pass through is provided on the bottom panel 14. However, liquid is sometimes accumulated in the groove. If the liquid evaporates into the device cabinet 1 through the opening that is on the bottom panel 14 and that is for the third cable 300 to pass through, there may be a risk of damaging apparatuses and components (for example, the first switching component 411) in the device cabinet 1.

Therefore, in some embodiments, with reference to FIG. 17, the charging device 01 further includes a base 400. The base 400 is fastened to a bottom of the bottom panel 14. The base 400 has internal space (or an internal chamber). Both a bottom and a top of the base 400 are provided with cable ports 401 that communicate with the internal space of the base 400. A part that is of the third cable 300 and that is located outside the device cabinet 1 further passes through the two cable ports 401 of the base 400. In addition, a peripheral wall of the base 400 further has an air vent 402 that communicates with the internal space of the base 400. The air vent 402 is provided on the base 400, so that more liquid in the groove can evaporate outward through the air vent 402, and the apparatuses and components in the device cabinet 1 are protected.

The base 400 may be any appropriate structure. In some embodiments, the base 400 is a rectangular frame and includes four interconnected plates. The four plates enclose the internal space of the base 400, and at least one of the four plates has the air vent 402. The top of the frame-type base 400 is configured to abut against the bottom panel 14 of the device cabinet 1, and the top and the bottom of the base 400 have openings respectively. The openings at the top and the bottom of the base 400 are both the cable ports 401. In some other embodiments, the base 400 is a rectangular prism and includes six plates located on different sides (upper, lower, left, right, front, and rear). The six plates enclose the internal space of the base 400. The upper plate (the top of the base 400) of the base 400 is configured to abut against the bottom panel 14 of the device cabinet 1. In addition, both the upper plate (the top of the base 400) and the lower plate (the bottom of the base 400) of the base 400 are provided with the cable ports 401. In addition, in addition to the upper plate and the lower plate of the base 400, at least one of the remaining four plates (left, right, front, and rear plates) of the base 400 has the air vent 402.

In addition, in some embodiments, a sealing structure may be further disposed on the bottom panel 14 of the device cabinet 1, to seal the opening that is on the bottom panel 14 and that is for the third cable 300 to pass through, so that a protection level of the device cabinet 1 is improved.

In addition, with reference again to FIG. 3, the charging device 01 further includes a gun holder 600. A quantity of gun holders 600 is the same as a quantity of charging connectors 5. For example, in the embodiment shown in FIG. 3, two gun holders 600 are disposed and fastened to the first cabinet door 9, the two gun holders 600 are arranged along the width direction (the X-axis direction) of the device cabinet 1, one gun holder 600 is used for insertion of the first charging connector 51, and the other gun holder 600 is used for insertion of the second charging connector 52. When the charging connector 5 is not used, the charging connector 5 may be inserted into the corresponding gun holder 600.

When the gun holder 600 is fastened to the first cabinet door 9, an arrangement manner of the gun holder 600 and the display 91 may be set according to a requirement. For example, with reference to FIG. 3, the two gun holders 600 are located below the display 91. In this arrangement manner, a size of the device cabinet 1 in the width direction (the X-axis direction) can be reduced, and an area occupied by the device cabinet 1 can be reduced.

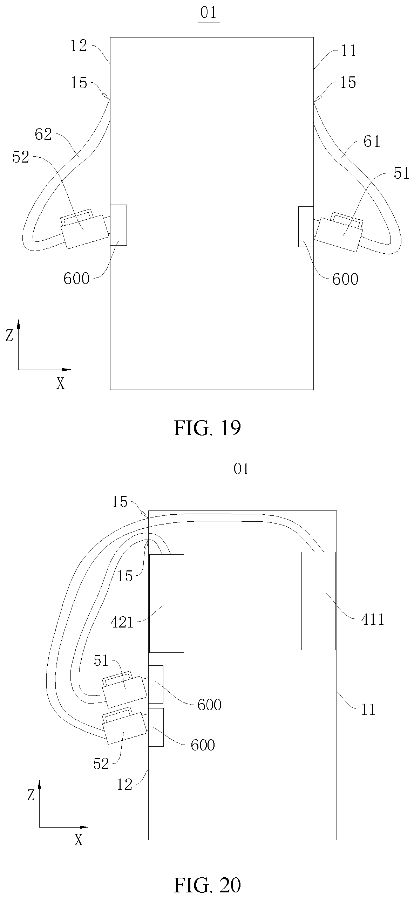

In some other embodiments, FIG. 19 shows an example of positions of the gun holders 600. The gun holder 600 used for insertion of the first charging connector 51 is disposed on the first side panel 11, and the gun holder 600 used for insertion of the second charging connector 52 is disposed on the second side panel 12. In some other embodiments, FIG. 20 shows an example of other positions of the gun holders 600. All the gun holders 600 are disposed on the second side panel 12 (or all the gun holders 600 are disposed on the first side panel 11).

In some other embodiments, the gun holder 600 may not be disposed on the device cabinet 1, but is supported on one side of the device cabinet 1 by using a support structure. In this embodiment, there is a spacing between the gun holder 600 and the device cabinet 1.

In some embodiments, a return switch (for example, a micro switch) is disposed on each gun holder 600. After the charging connector 5 is inserted into the corresponding gun holder 600, a return switch on the gun holder 600 is triggered. After the charging connector 5 is pulled out from the corresponding gun holder 600, the return switch on the gun holder 600 is released. The charging device 01 may determine, by detecting whether the return switch on the gun holder 600 is triggered, whether the charging connector 5 is inserted into the gun holder 600.

To enable the first cable 61 and the second cable 62 to pass through the device cabinet 1 smoothly, cable outlets 15 are provided on the device cabinet 1. In some embodiments, with reference to FIG. 19, a cable outlet 15 of the first cable 61 is provided on the first side panel 11, and a cable outlet 15 of the second cable 62 is provided on the second side panel 12. The first cable 61 and the second cable 62 are routed out nearby, so that lengths of the first cable 61 and the second cable 62 remaining in the device cabinet 1 are shortened. In some other embodiments, with reference to FIG. 20, both a cable outlet 15 of the first cable 61 and a cable outlet 15 of the second cable 62 are provided on the second side panel 12 (or both are provided on the first side panel 11).

In some embodiments, the charging device 01 may further include an emergency stop button 500. When an emergency danger occurs in a process of using the charging device 01, the emergency stop button 500 may control the charging device 01 to stop charging. The emergency stop button 500 may be disposed at any appropriate position. In the embodiment shown in FIG. 16, the emergency stop button 500 is fastened to the first side panel 11. In some other embodiments, the emergency stop button 500 is fastened to the second side panel 12, the first cabinet door 9, or the second cabinet door 100. In some other embodiments, the charging device 01 may alternatively not include the emergency stop button 500.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging device, comprising:
a device cabinet, wherein the device cabinet comprises a first side panel and a second side panel that are arranged along a width direction of the device cabinet, and a top panel and a bottom panel that are arranged along a height direction of the device cabinet;
a first cabinet door, wherein the first cabinet door is connected to the first side panel or the second side panel, and the first cabinet door has a display;
a first switching component, wherein the first switching component is located in the device cabinet and is fastened to the first side panel, and an input end of the first switching component is configured to electrically connect to a power supply;
a first charging connector, wherein the first charging connector is located outside the device cabinet, and the first charging connector is configured to connect to a to-be-charged device;
a first cable, wherein a part of the first cable is located in the device cabinet and is connected to an output end of the first switching component, and the other part of the first cable is located outside the device cabinet and is connected to the charging connector; and
a first control board, wherein the first control board is located in the device cabinet and is fastened to the first side panel, and the first control board is electrically connected to the first switching component and is configured to control turn-on and turn-off of the first switching component.

2. The charging device according to claim 1, wherein the charging device further comprises a first mounting bracket, the first mounting bracket is fastened to the first side panel, and the first switching component is fastened to a side that is of the first mounting bracket and that is away from the first side panel; and
the first control board is fastened to a side that is of the first mounting bracket and that faces the first cabinet door; or
the first control board is at least partially located in the first mounting bracket and disposed between the first switching component and the first side panel, the first mounting bracket has a first opening facing the first cabinet door, and the first opening is used for insertion of the first control board into the first mounting bracket or removal of the first control board from the first mounting bracket.

3. The charging device according to claim 2, wherein the charging device further comprises a first power supply apparatus, the first power supply apparatus is configured to electrically connect to the power supply and the first control board, and the first power supply apparatus is configured to perform power conversion on electric energy input by the power supply and output the converted electric energy to the first control board to supply power to the first control board; and
the first power supply apparatus is fastened to the side that is of the first mounting bracket and that faces the first cabinet door; or
the first power supply apparatus is at least partially located in the first mounting bracket and disposed between the first switching component and the first side panel, the first mounting bracket further has a second opening facing the first cabinet door, and the second opening is used for insertion of the first power supply apparatus into the first mounting bracket or removal of the first power supply apparatus from the first mounting bracket.

4. The charging device according to claim 1, wherein the charging device further comprises a first power supply apparatus, the first power supply apparatus is located in the device cabinet and is fastened to the top panel, the first power supply apparatus is configured to electrically connect to the power supply and the first control board, and the first power supply apparatus is configured to perform power conversion on electric energy input by the power supply and output the converted electric energy to the first control board to supply power to the first control board.

5. The charging device according to any one of claims 1 to 4, wherein the charging device further comprises a first cooling assembly, and the first cooling assembly is connected to the first side panel and is located below the first switching component; and
the first cooling assembly comprises a first driving piece and a first heat exchanger, the first cable has a cooling channel for a cooling medium to flow, the first heat exchanger has a first heat exchange channel and a second heat exchange channel, the first heat exchange channel communicates with the cooling channel, the second heat exchange channel is configured to connect to a cooling source outside the device cabinet, and the first driving piece is configured to drive the cooling medium to circulate between the first heat exchange channel and the cooling channel.

6. The charging device according to claim 5, wherein the charging device further comprises a first receiving seat and a first liquid discharge channel, the first receiving seat is located below the first heat exchanger, the first receiving seat is configured to receive liquid from the first heat exchanger, a liquid inlet of the first liquid discharge channel is configured to communicate with the first receiving seat, and a liquid outlet of the first liquid discharge channel is configured to communicate with external space of the device cabinet.

7. The charging device according to claim 6, wherein a part that is of the first cable and that is located in the device cabinet has an interface that communicates with the cooling channel, the interface is located above the first switching component, and the interface communicates with the first heat exchange channel via a pipe; and
the charging device further comprises a blocking piece, the blocking piece is fastened to the first side panel and extends toward a side that is away from the first side panel, the blocking piece is located between the interface and the first switching component, and the blocking piece is configured to block liquid from the interface from flowing to the first switching component.

8. The charging device according to any one of claims 1 to 4, wherein the charging device further comprises a second cabinet door, the second cabinet door and the first cabinet door are respectively located on different sides of the device cabinet in a thickness direction of the device cabinet, and the second cabinet door is connected to the second side panel or the first side panel.

9. The charging device according to any one of claims 1 to 4, wherein the charging device further comprises:
a second switching component, wherein the second switching component is located in the device cabinet and is fastened to the second side panel, and an input end of the second switching component is configured to electrically connect to the power supply;
a second charging connector, wherein the second charging connector is located outside the device cabinet, and the second charging connector is configured to connect to a to-be-charged device;
a second cable, wherein a part of the second cable is located in the device cabinet and is connected to an output end of the second switching component, and the other part of the second cable is located outside the device cabinet and is connected to the second charging connector; and
a second control board, wherein the second control board is located in the device cabinet and is fastened to the second side panel, and the second control board is electrically connected to the second switching component and is configured to control turn-on and turn-off of the second switching component.

10. The charging device according to any one of claims 1 to 4, wherein the charging device further comprises a third control board, the third control board is electrically connected to the display, and the third control board is fastened to the first cabinet door or is fastened to the top panel.

11. The charging device according to any one of claims 1 to 4, wherein the charging device further comprises a first electric meter, and the first electric meter is configured to display charging data of the first charging connector; and
the first electric meter is fastened to a side that is of the first switching component and that faces the first cabinet door; or
the charging device further comprises a second mounting bracket, the second mounting bracket is located on a side that is of the first switching component and that is away from the first cabinet door, the second mounting bracket is fastened to the first side panel or the second side panel, the first electric meter is fastened to a side that is of the second mounting bracket and that faces the first cabinet door, and the first electric meter and the first switching component are disposed in a staggered manner in the width direction of the device cabinet.

12. The charging device according to any one of claims 1 to 4, wherein the charging device further comprises:
a third cable, wherein the third cable passes through the bottom panel, a part of the third cable is located in the device cabinet and is connected to the input end of the first switching component, and the other part of the third cable is located outside the device cabinet and is configured to electrically connect to the power supply; and
a base, wherein the base is fastened to a bottom of the bottom panel, both a top and a bottom of the base have cable ports that communicate with internal space of the base, the third cable passes through the two cable ports of the base, and a peripheral wall of the base has an air vent that communicates with the internal space of the base.

13. The charging device according to any one of claims 1 to 4, wherein the charging device further comprises a protective cover, and the protective cover is fastened in the device cabinet; and
the protective cover is located on a side that is of the first switching component and that faces the first cabinet door, and the protective cover shields the first switching component; or the protective cover is located on a side that is of the first switching component and that is away from the first side panel, and the protective cover is disposed over the first switching component.

14. The charging device according to any one of claims 1 to 4, wherein the charging device further comprises a heat dissipator, the heat dissipator is fastened in the device cabinet, the heat dissipator has a heat dissipation channel, the heat dissipation channel is configured to connect to a cooling source outside the device cabinet, and the heat dissipator is configured to exchange heat with air inside the device cabinet.

15. The charging device according to claim 14, wherein the charging device further comprises a second receiving seat and a second liquid discharge channel, the second receiving seat is located below the heat dissipator, the second receiving seat is configured to receive liquid from the heat dissipator, a liquid inlet of the second liquid discharge channel is configured to communicate with the second receiving seat, and a liquid outlet of the second liquid discharge channel is configured to communicate with external space of the device cabinet.
